# EUROPEAN PATENT SPECIFICATION

(11) **EP 4 255 709 B1**
(45) Date of publication and mention of the grant of the patent: **02.10.2024**
(21) Application number: 21835834.9
(22) Date of filing: 03.12.2021
(51) Int. Cl.: B29C 45/00, B29C 45/17, B29C 45/26, B29C 45/57

(54) **INJECTION MOLDING APPARATUS AND INJECTION MOLDING METHOD**
SPRITZGIESSVORRICHTUNG UND SPRITZGIESSVERFAHREN
APPAREIL DE MOULAGE PAR INJECTION ET PROCÉDÉ DE MOULAGE PAR INJECTION

(30) Priority: 04.12.2020 IT 202000029864
(43) Date of publication of application: 11.10.2023
(73) Proprietor: SMART MOLD S.R.L., 35013 Cittadella (PD) (IT)
(72) Inventor: LUCCHETTA, Giovanni, 36015 Schio (Vicenza) (IT); SCANTAMBURLO, Andrea, 35016 Piazzola sul Brenta (IT); SORGATO, Marco, 35027 Noventa Padovana (Padova) (IT)
(74) Representative: Manfrin, Marta
(86) International application number: PCT/IB2021/061316
(87) International publication number: WO 2022/118280

(56) References cited:
- JP-A- 2014 019 114
- JP-A- H0 557 741
- JP-A- H07 148 798
- JP-A- H07 266 363
- JP-B2- 3 300 531
- US-A- 5 766 654
- IBAR J P: "CONTROL OF POLYMER PROPERTIES BY MELT VIBRATION TECHNOLOGY: A REVIEW", POLYMER ENGINEERING AND SCIENCE, BROOKFIELD CENTER, US, vol. 38, no. 1, 1 January 1998 (1998-01-01), pages 1 - 20, XP000848898, ISSN: 0032-3888, DOI: 10.1002/PEN.10161

## Description

### DESCRIPTION

The invention relates generally refer to an injection molding apparatus for making an article, an injection molding plant for making an article and a related injection molding method for making an article. It is an article wherein a solid body is obtained through injection molding, that is to say, without internal cavities.

More specifically, the invention relates to an apparatus and a plant for injection molding of polymeric material as well as a method of injection molding of polymeric material which are particularly designed and configured to improve the mechanical properties and the aesthetic features of an article to be made at or near the relative joint lines.

In the injection molding of polymeric materials, the polymeric material is introduced in the molten state into the cavity of a mold which is opened after the solidification of the manufactured article. The introduction or injection of molten polymeric material into the cavity of the mold is commonly called the filling step. During the filling step, the molten polymeric material which is injected or introduced into the cavity advances, that is, flows, within the latter along a main direction called the "filling direction".

During this phase, if there are obstacles in the mold cavity for the flow of polymeric material in the molten state, such as cores or pins, or if there are several injection mouths from which the molten polymeric material is introduced into the cavity, the creation of two or more distinct fractions, or distinct flows, of molten polymeric material is inevitable. Such distinct fractions, or distinct flows of molten polymeric material, after passing the core or pin or after being introduced into the cavity, continue to advance along the filling direction until they join together giving rise to a so-called joint line or melt line. In other words, the formation of the so-called joining or melt lines occurs when the flow front of molten polymeric material divides around an obstacle in the cavity and re-joins downstream of this or when the cavity is fed from different injection points generating distinct flows of molten polymeric material whose fronts meet inside the cavity. According to the angle of incidence of the flow fronts that meet (and therefore the size of the obstacles that form them or the position of the injection mouths) it is possible to distinguish between joint lines or melt lines.

In general, therefore, the term joint line or melt line indicates the line along which two or more distinct flows, or distinct fractions, of molten polymeric material meet or converge inside the mold cavity during the filling process.

The joint or melt lines represent an aesthetic or visual defect in an article. In fact, they can extend up to the visible surface of the molded article and be particularly evident in the form of lines or notches or appear as a region in which a colour variation is visible. More seriously, the joint or melt lines represent structural defects of the article obtained by injection molding. At the meeting of two or more flow fronts in the joint or melt line there is a poor inter-diffusion and a reduced interaction between the polymeric chains belonging to the different fractions, or flows, of polymeric material. It follows that a certain inconsistency of the polymeric material can be observed at a joint or melt line. For this reason, the mechanical properties of an article molded by injection molding, especially in terms of strength and rigidity, can be considerably reduced in the vicinity of a joint or melt line compared to other areas of the same article.

Moreover, in the case wherein the polymeric material is a thermoplastic mixed with reinforcing fillers (for example glass or carbon fibres), it is observed that at the joint or melt line the reinforcing fillers adopt an orthogonal orientation with respect to the filling direction whilst in the rest of the cavity the reinforcing fillers are arranged according to the filling direction. The different orientation of the reinforcing fillers in the vicinity of the joint or melt line results in a further significant reduction in the strength and rigidity of the molded article, adversely affecting its structural performance.

For simplicity, in the context of the invention, the term "joint line" will also mean a "melt line". In other words, according to the invention, the joint line will generally refer to the line along which two different flows, or different fractions, of molten polymeric material meet or converge inside the mold cavity during the filling process.

US 5 766 654 A and JP 2014 019114 A and disclose apparatuses and methods for injection moulding articles wherein joint lines are intermixed. Polymeric melt is injected into a main cavity comprising a first and a second region which receive a first fraction and second melt fraction comprising flow fronts which meet and form a joint line. The melt is further caused to flow via a first and second mouth into first and second auxiliary cavities to fill them with first and second auxiliary melt. The first and second auxiliary melt is pushed by pistons or pins in an alternating pattern to create melt flow which moves a joint line forth and back resulting in shifting of flow fronts which formed the joint line.

JP H07 148798 A discloses the use of an auxiliary cavity to avoid sink marks. Compressed gas is introduced into an auxiliary cavity by which the molten resin in the auxiliary cavity is pressed and the pressure is transmitted to a thick-walled part of the cavity. JP H07 266363 A also concerns avoidance of sink marks by injecting pressurized gas into gas inlet bosses which are connected to thick areas of an article and wherein gas enters the main cavity. JP H05 57741 A discloses the manufacture of a hollow article gas injection from two sides into a main cavity to push the melt of fibre reinforced material, thus causing intermixing of two melt fronts which formed a joint line. JP 3 300531 B2 concerns avoidance of sink marks by employing an external gas pressure process at bosses of an article.

The invention starts from the acknowledgment by its own authors that, in order to mitigate the effects or the influence of a joint line on the mechanical properties and aesthetic appearance of an injection molded article, it is necessary to favour the interpenetration of the fronts of flow that generate the joint line, in such a way as to modify the shape of the interface, promote the inter-diffusion between the flow fronts and the realignment of any fillers or reinforcing fibres.

The invention therefore proposes to make available an injection molding apparatus for manufacturing an article, an injection molding plant for the manufacture of an article and a method for injection molding an article P which overcome the above-mentioned drawbacks with reference to the prior art and/or to achieve further advantages.

This is achieved through an injection molding apparatus for making an article as defined in claim 1, an injection molding plant for making an article as defined in claim 11 and an injection molding method for making an article as defined in claim 12. Secondary features and particular embodiments of the object of the invention are defined in the corresponding dependent claims.

Specifically, the apparatus according to the invention comprises:
- a mold body having an inner surface defining a main cavity apt in use to contain primary molten polymeric material;
- a tank in fluid communication with the main cavity by means of a mouth passing through said inner surface and apt in use to contain auxiliary molten polymeric material;
- a pressurized gas injector, communicating with the tank and configured to inject the pressurized gas into the tank to displace at least part of the auxiliary molten polymeric material from the tank into the main cavity.

The pressurized gas injector is further configured in such a way as to keep said pressurized gas out of said main cavity and/or in such a way that at least part of said auxiliary molten polymeric material acts as a barrier against an entry of said pressurized gas into the cavity.

In practice, only the auxiliary molten polymeric material enters into the cavity and acts as a member for transmitting the motion from the pressurized gas to the primary molten polymeric material. The assembly formed by the auxiliary molten polymeric material and the pressurized gas acts as a thrust member for the primary molten polymeric material, and allows the pressurized gas to be used to exert the pressure, without however forming cavities.

In other words, in use, the pressurized gas blown, that is, injected, into the tank exerts a pressure, that is, a thrust, on the auxiliary molten polymeric material contained therein. The auxiliary molten polymeric material from the tank is then forced, through the mouth, into the main cavity. In other words, the injection of pressurized gas into the tank generates a flow of auxiliary molten polymeric material starting from the same tank to the main cavity, where it meets the primary molten polymeric material present there. The auxiliary molten polymeric material entering the tank compresses and displaces the primary molten polymeric material present in the main cavity. The displacement of the primary molten polymeric material makes it possible to modify the geometric shape of any joint line formed within the main cavity. In fact, the pressurized gas acts on the more fluid, less viscous, auxiliary molten polymeric material contained in the tank and, consequently, on the primary molten polymeric material in the main cavity. In this way a remixing of the primary molten polymeric material is caused which allows any flow fronts which have given rise to a joint line J to interpenetrate and, therefore, to make the latter less clear. For this reason, since the interpenetration of the interfaces of the flow fronts is promoted, it is possible to achieve an increase in the molecular inter-diffusion of the molten polymeric material in at the possible joint line J and a re-orientation of any reinforcing fibres present.

Moreover, the use of a pressurized gas injector as defined above allows further advantages to be obtained.

In particular, a first advantage consists in the fact that since the pressurized gas injector is coupled to the tank of auxiliary molten polymeric material, the fact that the pressurized gas can be injected directly into the main cavity is prevented. In other words, the pressurized gas is used only to push the auxiliary molten polymeric material into the main cavity. The pressurized gas does not come into direct contact with the primary molten polymeric material and does not enter into the main cavity of the mold; it follows that no zones without primary molten polymeric material or auxiliary molten polymeric material are formed through the gas in the main cavity which, following solidification, could give rise to recesses or hollow spaces inside the molded article. In other words, the injector injects the pressurized gas into the tank and it is configured to prevent the pressurized gas from advancing into the main cavity of the mold, avoiding the formation of cavities or spaces free of polymeric material in the final molded product.

The pressurized gas does not form internal cavities inside the cavity, and therefore the apparatus is destined, through the primary molten polymeric material, to obtain a solid body.

More specifically, according to the context of the invention, the expression "solid article or body", that is, without internal cavities, means a non-hollow piece or body that is to be made by means of gas, that is, without desired cavities inside. It is to be understood that the formation of bubbles inside the mass of fluid such as to form mini-cavities when the mass solidifies cannot be excluded for technical reasons, but that such bubbles are not desired at the end of the formation of the body/final article. In practice, no cavities are deliberately formed through the pressurized gas. In any case, nothing prevents the final article from having a shape such as to define empty spaces, or hollows, for example in a doughnut shape, but that such hollows are not made by means of the pressurized gas with the process described here.

According to the context of the invention, the term "article" therefore means a piece obtained by injection by means of the fluid polymeric material.

In addition, a further advantage consists in the energy efficiency of the apparatus. In other words, thanks to the use of pressurized gas, the apparatus is particularly efficient from the point of view of energy consumption. The gas, in fact, proceeds along a path of minimum resistance, acting on the less viscous, and therefore hotter, auxiliary molten polymeric material which is located in the heart of the tank, that is, in its innermost part. In other words, the gas injected into the tank empties the central, that is, innermost, part of the tank regardless of the thickness of the surface layer of solidified auxiliary material along the walls of the tank. Consequently, the mixing effect within the main cavity is achieved by applying a sufficient pressure to move the auxiliary polymeric material present at the heart of the tank. In other words, it is sufficient to exert such a pressure to push the auxiliary molten polymeric material present in the centre or at the heart of the tank. For this reason, since it is not necessary to overcome the resistance of the solidified surface layer of the auxiliary polymeric material, the apparatus is particularly efficient from the energy point of view.

Thanks to the configuration of the gas injector, and the use of the auxiliary polymeric material, it is possible to inject gas as a thrust member with all the above-mentioned advantages and at the same time to obtain, by molding, a solid product.

A further advantage of the apparatus consists in the possibility of making the apparatus in a very compact form, that is, having limited overall dimensions. This is possible since the gas injectors and the respective tanks for this present application can have negligible dimensions compared to those of the mold body. By virtue of this, the apparatus can be made starting from or comprising a pre-existing mold body, that is, not specially designed and made to be coupled to the other elements of the apparatus. In fact, the gas injectors and the respective tanks, having limited dimensions, do not interfere, if not minimally, with any other elements pre-coupled to the mold body.

A further advantage of the apparatus according to the invention consists in the fact that the use of pressurized gas allows problems of friction and wear within the tank to be minimised; the apparatus therefore requires minimal maintenance interventions.

A further advantage of the apparatus according to the invention consists in the fact that the use of pressurized gas, in particular nitrogen, is perfectly compatible with the applications in the food and biomedical sectors. In other words, the manufacture of articles intended to be in contact, in use, with food or drugs, or any material for which it is necessary to guarantee a high level of sterility, is facilitated. In particular, the nitrogen is easily extractable from the air and is minimally reactive, being, after the noble gases, the most inert chemical element.

The use of pressurized gas makes it possible to create tanks with much freer geometries, because they are not bound to the need to be coupled with that of a possible mobile element (for example, a piston with a regular and uniform section). The proposed solution allows tanks to be made that have draft angles to facilitate their extraction at the end of the molding cycle. Moreover, these appendages can easily adapt in shape to the need to make it compatible with the design of a pre-existing mold and to position them as close as possible to the joint lines.

According to a preferred aspect of the apparatus, the main cavity is at least extended along at least one filling direction of the primary molten polymeric material, and said inner surface comprises at least one side surface which delimits said main cavity at least around said filling direction and wherein said mouth passes through said side surface. That is to say, the side surface delimits the main cavity parallel to the filling direction of the primary molten polymeric material. In other words, the side surface represents or defines the shell of the main cavity. The mouth made in the side surface causes the injection of auxiliary molten polymeric material in a direction transversal to the filling direction.

The pressurized gas injector is configured to inject the pressurized gas into the tank to displace at least part of the auxiliary molten polymeric material from the tank into the main cavity along a thrust direction; wherein the thrust direction is oriented substantially transversely to said filling direction or intersects the filling direction. Similarly to what has already been said, the auxiliary molten polymeric material can be pushed into the main cavity in a direction transversal to the filling direction.

According to a preferred aspect of the apparatus, the inner surface corresponds to a negative of, or is complementary to, said article to be made. The side surface is a portion or part of the inner surface.

The main cavity comprises a first region apt to receive a first fraction of the primary molten polymeric material and a second region apt to receive a second fraction of the primary molten polymeric material. At least two regions intended in use to receive a first fraction of the primary molten material and a second fraction of the primary molten material are therefore identifiable or definable inside the main cavity. In particular, the first region and the second region can correspond to two regions or areas located downstream of an obstacle, such as a pin or a core projecting into the cavity, or downstream of a first injection mouth and a second injection mouth. Therefore, if there is a first injection mouth and a second injection mouth through which, respectively, the first fraction of primary molten polymeric material and the second fraction of primary molten polymeric material are introduced into the main cavity, the first region and the second region may correspond to an area in the vicinity and downstream of, according to the filling direction, the first injection mouth and the second injection mouth, respectively. Whilst, if there is an obstacle that protrudes inside the main cavity, determining a subdivision of the flow of primary molten polymeric material in the first and second fractions, the first region and the second region may correspond to a zone in the vicinity and downstream of, according to the direction of filling, the same obstacle.

According to a preferred aspect of the apparatus, the tank communicates with a zone interposed between the first region and the second region. The zone interposed between the first region and the second region is that in which, due to the confluence of the first fraction and the second fraction of auxiliary polymeric material, is destined to form the joint line J. According to this aspect, the mouth is made in the inner surface at the area interposed between the first region and the second region, therefore in the vicinity of the area of the main cavity where the joint line is intended to be formed. In this way, the introduction of the auxiliary molten polymeric material is localised or targeted so as to cause an interpenetration between the flow front of the first fraction and of the second fraction of primary polymeric material at the joint line.

The injector comprises a nozzle having an outlet completely contained within the tank. The outlet is in use therefore destined to remain submerged in the auxiliary molten polymeric material in order to inject or push the latter into the main cavity.

According to a preferred aspect of the apparatus, the main cavity and the tank are defined within the mold body. In other words, the main cavity and the tank are formed within the mold body. The mold body includes inside it the cavity and the tank. In this way, it is possible to limit the overall dimensions of the mold body.

According to a preferred aspect of the apparatus, it further comprises an inlet channel, interposed between the tank and the mouth, having a constant cross section or which gradually narrows towards said mouth. In other words, the inlet channel is a substantially tubular body or element which connects the tank and the mouth and which can have a constant or converging trend towards the mouth. In other words, the diameter of this tubular element can be constant or, otherwise, it can progressively reduce towards the mouth. If the inlet channel converges towards the mouth, it creates a narrowing between the tank and the mouth. Depending on the shape of the cross section of the inlet channel, it is possible to influence the flow of the auxiliary molten polymeric material and its solidification within the inlet channel.

The tank is a first tank, the mouth is a first mouth, the injector is a first injector and the apparatus further comprises:
- a second tank in fluid communication with the main cavity by means of a second mouth passing through said inner surface and apt in use to contain auxiliary molten polymeric material;
- a second pressurized gas injector, communicating with the second tank and configured to inject the pressurized gas into the second tank to displace at least part of the auxiliary molten polymeric material from the second tank into the main cavity.

It follows that the auxiliary molten polymeric material can be pushed into the main cavity from a further, different, injection point. The remixing of the primary molten polymeric material in the cavity is therefore further promoted.

The first tank is in fluid communication with the first region and the second tank is in fluid communication with the second region and wherein the first mouth and the second mouth are arranged substantially opposite each other. It follows that the auxiliary molten polymeric material can be pushed along substantially the same thrust direction, or parallel thrust directions, but having opposite orientations. In this way, it is particularly possible to obtain an effect of interpenetration of the flow fronts of the first and second fraction of primary molten polymeric material at the joint line.

The nozzle is a first nozzle and the second injector comprises a second nozzle having an outlet mouth completely contained within said second tank. As mentioned with reference to the first nozzle, also in this case the second outlet mouth is in use therefore destined to remain submerged in the auxiliary molten polymeric material in order to inject or push the latter into the main cavity.

According to a preferred aspect of the apparatus, the second tank is defined within said mold body. As stated above, the second tank can also be formed within the mold body. That is to say, the mold body also includes the second tank inside it.

According to a preferred aspect of the apparatus, the inlet channel is a first inlet channel and the apparatus further comprises a second inlet channel, interposed between the second tank and the second mouth, and having a constant or narrowing cross section or which gradually narrows towards said second mouth.

According to a preferred aspect of the apparatus, the apparatus comprises a heating and cooling device configured to heat or cool the mold body. That is to say, the heating and cooling device is configured to vary or regulate or control the temperature of the mold body. Depending on the temperature assumed by the mold body, it is possible to control the solidification of the primary molten polymeric material in the main cavity and to control the viscosity of the primary molten polymeric material in the main cavity.

An object of the invention is also an injection molding plant for an article which comprises an injection molding apparatus as defined above. In particular, the plant according to the invention further comprises a first fraction of the primary molten polymeric material and a second fraction of the primary molten polymeric material, and auxiliary molten polymeric material; where the side-by-side or frontal encounter of the first fraction of the primary molten polymeric material and the second fraction of the primary molten polymeric material defines or determines a joint line inside the main cavity. The pressurized gas injector is configured to inject pressurized gas into the tank to displace at least some of the auxiliary molten polymeric material from the tank into the main cavity such that at least part of the first fraction is forced through the second fraction of material and/or at least part of the second fraction is forced through the second fraction of material.

The plant comprises an apparatus having the first pressurized gas injector and the second pressurized gas injector configured to inject the pressurized gas, respectively, into the first tank and said second tank to displace at least part of the auxiliary molten polymeric material from, respectively, the first tank and the second tank into the main cavity such that at least part of the first fraction is forced through the second fraction of material and/or at least part of said second fraction is forced through said second fraction of material in opposite directions. That is to say that the thrust generated by the auxiliary molten polymeric material from the first tank and from the second tank causes a mutual displacement of the first fraction of primary molten polymeric material and of the second fraction of primary molten polymeric material, in particular of the respective flow fronts. This reciprocal displacement allows an interpenetration of the above-mentioned flow fronts to be obtained.

Lastly, an object of the invention is a method for injection molding an article. This method comprising the steps of:
- injecting primary molten polymeric material comprising a first fraction of primary molten polymeric material and a second fraction of primary molten polymeric material into a main cavity of a mold body,
- advancing said first fraction of primary molten polymeric material and said second fraction of primary molten polymeric material along a filling direction in such a way that said first fraction of primary molten polymeric material and said second fraction of primary molten polymeric material meet along a melt line;
- providing auxiliary molten polymeric material;
- blowing pressurized gas into said auxiliary molten polymeric material in such a way as to feed said auxiliary molten polymeric material towards said main cavity through at least one mouth in fluid communication with said main cavity so as to displace part of the primary molten polymeric material inside said main cavity.

The first and the second fraction of primary molten polymeric material advance respectively into a first region and a second region of the main cavity and said joint line is formed in a zone interposed between said first region and said second region and the displacement of part of the primary molten polymeric material inside the main cavity occurs at the zone interposed between said first region and the second region. In other words, the auxiliary molten polymeric material is introduced into the main cavity at or near the interposed zone. In this way, the primary molten polymeric material found in that zone is induced or forced to move. Since the interposed zone is the one where the joint line is formed, the mixing effect of the primary molten polymeric material is particularly targeted or localised in the proximity of or at the same joint line.

According to a preferred aspect, the displacement of part of the primary molten polymeric material inside the main cavity occurs along a direction transversal or parallel to the joint line.

The auxiliary molten polymeric material is a first auxiliary molten polymeric material and the mouth is a first mouth, and the step of blowing pressurized gas into the first auxiliary molten polymeric material so as to feed the second auxiliary molten polymeric material towards the main cavity occurs along a thrust direction in a first direction. In addition, according to this same aspect, the method also comprises the steps of:
- providing a second auxiliary molten polymeric material;
- blowing pressurized gas into the second auxiliary molten polymeric material in such a way as to feed the second auxiliary molten polymeric material towards the main cavity through at least the second mouth in fluid communication with the main cavity so as to displace part of the primary molten polymeric material into the main cavity. In particular, the step of blowing in pressurized gas into the first auxiliary molten polymeric material in such a way as to feed the second auxiliary molten polymeric material towards the main cavity occurs substantially along the thrust direction, or a direction substantially parallel to this, in a second direction opposite to the first verse. In other words, the method provides for feeding into the main cavity further auxiliary molten polymeric material in an opposite direction to the feeding of the first auxiliary molten polymeric material. The first auxiliary molten polymeric material and the second auxiliary molten polymeric material are a first fraction and a second fraction of the auxiliary molten polymeric material; for example a first fraction contained in a first tank and a second fraction contained in a second tank. Through this aspect, the re-mixing of the primary molten polymeric material in the cavity and the mutual interpenetration of the flow fronts of the first fraction and of the second fraction of the primary molten polymeric material are further promoted.

According to a preferred aspect, the step of blowing pressurized gas into the first auxiliary molten polymeric material and the step of blowing pressurized gas into the second auxiliary molten polymeric material take place simultaneously or in an alternating fashion. That is to say, the pressurized gas is injected into the first auxiliary molten polymeric material and the second auxiliary molten polymeric material in the same time interval or for time intervals alternating with each other. This can cause the primary molten polymeric material within the cavity to receive two thrusts, along substantially the same direction but in opposite directions to each other, simultaneously or alternately with each other.

The advantages presented with reference to the apparatus can also be obtained by implementing or actuating the molding plant for the manufacture of an article and the method of injection molding of an article as briefly outlined above.

Further advantages, characteristics and methods of use of the object of the invention will become evident from the following detailed description of its embodiments, presented merely by way of non-limiting examples.

It is however evident that each embodiment of the object of the invention can present one or more of the advantages listed above; however, each embodiment is not required to simultaneously present all the listed advantages.

Reference will be made to the figures of the attached drawings, in which:
- Figures 1A-1C show respectively an axonometric view, a side sectional view and a front sectional view of a part of an apparatus according to the invention;
- Figures 2A-2D illustrate some steps of an embodiment of the method according to the invention;

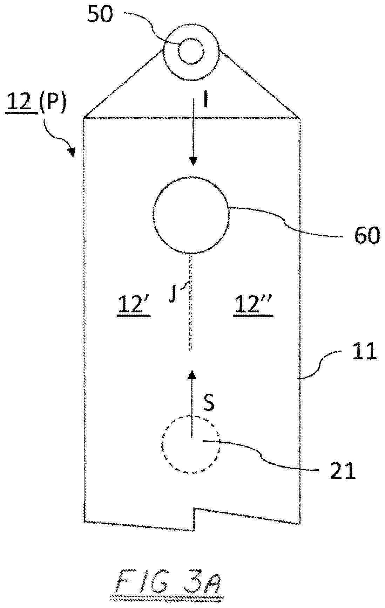

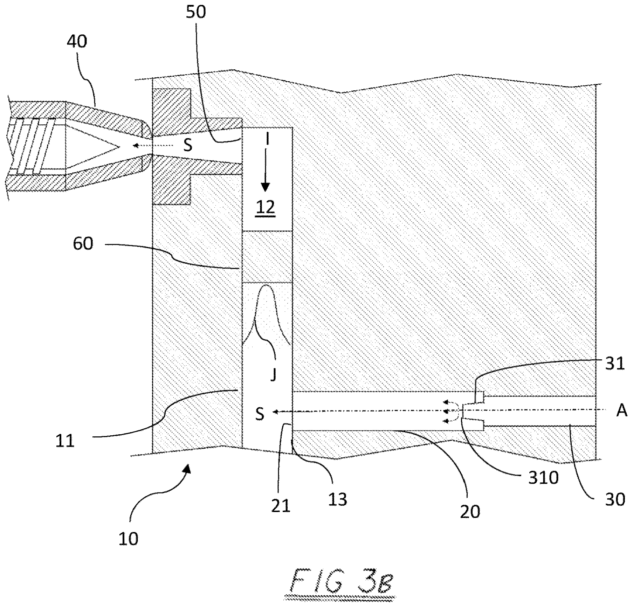

- Figures 3A-3B show respectively a top view and a sectional view of a part of an apparatus according to the invention.

As mentioned above, for simplicity in the context of the invention, the expression "joint line" will also mean a "melt line". In other words, according to the invention, the joint line will generally refer to the line along which two different flows, or different fractions, of molten polymeric material meet or converge inside the mold cavity during the filling process.

With reference to the accompanying drawings, an embodiment of an injection molding apparatus, according to the invention, is denoted overall with the reference number 1.

This apparatus 1 is aimed at making an article P and comprises a mold body 10 having an inner surface 11 which defines a main cavity 12. The main cavity 12 is apt in use to contain primary molten polymeric material.

The apparatus 1 further comprises a take 20 apt, in use, to contain auxiliary molten polymeric material, that is, reserve or additional primary molten polymeric material. In other words, the auxiliary molten polymeric material is polymeric material, having the same chemical composition as the primary molten polymeric material, which is temporarily stored in the tank 20. The tank 20 is configured to act, therefore, as a reserve or accumulation of primary polymeric material. The tank 20 is in fluid connection with the main cavity 12. In particular, the tank 20 is in fluid communication with the main cavity 12 by means of a mouth 21, that is, an opening, passing through the inner surface 11.

In addition, the apparatus 1 comprises a pressurized gas injector 30 communicating with the tank 20. The pressurized gas injector 30 is in fluid communication with the tank 20. The pressurized gas injector 30 is configured to inject or blow the pressurized gas into the tank 20 to displace at least part of the auxiliary molten polymeric material contained in the tank 20 into the main cavity 12 in such a way that an entry of the pressurized gas is prevented inside the main cavity 12, and/or in such a way that no cavities/gaps are formed in the mass of the article to be obtained.

In other words, the injector 30 is configured to inject the pressurized gas into the tank 20 to displace at least part of the auxiliary molten polymeric material from the tank 20 into the main cavity 12 along a thrust direction S, and at the same time to prevent the pressurized gas entering the main cavity 12 of the mold body 10. It follows that part of the auxiliary molten polymeric material of the tank 20 interrupts a communication or any passage between the pressurized gas and the main cavity 12. In other words, the auxiliary molten polymeric material of the tank 20 acts as a protective barrier to prevent the pressurized gas from entering the main cavity 12.

By exploiting the volumetric shrinkage which occurs due to the cooling as soon as molten material is fed to the main cavity 12, in use it is possible to introduce further molten material from the tank 20, that is, the auxiliary molten polymeric material, into the main cavity 12.

In use, the pressurized gas blown into the tank 20 exerts a pressure or a thrust on the auxiliary molten polymeric material contained therein. The auxiliary molten polymeric material from the tank 20 is then forced, through the mouth 21, into the main cavity 12. The auxiliary molten polymeric material from the tank 20 passes, through the mouth 21, and enters into the main cavity 12 in the thrust direction S. In other words, the injection of pressurized gas into the tank 20 generates a flow of auxiliary molten polymeric material starting from the same tank 20 up to the main cavity 12, where it meets the primary molten polymeric material present there, whilst the pressurized gas does not move into the main cavity 12, that is, it remains entirely inside the tank 20.

The auxiliary molten polymeric material entering the tank 20 compresses and displaces the primary molten polymeric material present in the main cavity 12. The displacement of the primary molten polymeric material makes it possible to modify the geometric shape of any joint line J formed within the main cavity 12. In fact, the pressurized gas acts on the more fluid, less viscous, auxiliary molten polymeric material contained in the tank 20 and, consequently, on the primary molten polymeric material in the main cavity 12. In this way the primary molten polymeric material is remixed or moved; and by virtue of this it is possible to obtain an effect of interpenetration of any flow fronts that have given rise to a joint line J and, therefore, to make the latter less clear.

In other words, therefore, the auxiliary molten polymeric material acts as a motion transmission fluid, that is to say, the thrust of the pressurized gas is transmitted to the primary molten polymeric material through the action of the auxiliary molten polymeric material, but at the same time acts as a penetration barrier so that the pressurized gas does not enter the main cavity 12. Moreover, in use, the main cavity 12 of the mold is full, that is, it is completely filled with primary molten polymeric material and/or auxiliary molten polymeric material, and there are no zones in which there is pressurized gas, even after solidification of the article P.

As a result, a solid article P can be obtained.

According to a preferred aspect of the invention, the main cavity 12 extends, or develops, along at least a filling direction I of the primary molten polymeric material. In particular, the filling direction I is the direction along which, mainly, the primary molten polymeric material advances into the main cavity 12. In other words, the filling direction is the direction of injection or introduction of the primary molten polymeric material along which, in use, it flows into the main cavity 12. In use, especially during the step for filling the cavity, the primary molten polymeric material is injected into the main cavity 12 and flows inside the latter along the filling direction I.

According to a preferred aspect of the present invention, the inner surface 11 of the mold body 10 further comprises at least one side surface 13 which delimits or surrounds the main cavity 12 around the filling direction I. That is to say, the side surface 13 surrounds the main cavity 12 around the filling direction I. The side surface 13 forms or defines, that is to say, the shell of the main cavity 12 and has an axis of extension parallel to the filling direction I.

Furthermore, according to a preferred aspect of the invention, the mouth 21 is made in the side surface 13. That is to say, the mouth 21 passes through the side surface 13. Since the tank 20 is in fluid connection with the side surface 11, the auxiliary molten polymeric material enters the main cavity 12 laterally. In other words, the auxiliary molten polymeric material from the tank 20 enters from the side of the main cavity 12; that is to say, it enters transversely to the filling direction I. For this reason, the auxiliary molten polymeric material from the tank 20 can exert a thrust on the primary molten polymeric material transversely to the filling direction I. In this way, if the joint line J has formed parallel to the filling direction I, the auxiliary molten polymeric material tends to generate a thrust on the primary molten polymeric material such that it is conducted transversely through the joint line J. That is to say, the primary molten polymeric material is induced to cross the interface between the two flow fronts which gave rise to the joint line. If the joint line J has formed transversely to the filling direction I, the auxiliary molten polymeric material can generate a thrust on the primary molten polymeric material such that it is displaced in the same direction as the joint line J is present, attenuating, especially near the inner surface 11 the visibility of the joint line J. This attenuation is particularly appreciable when the polymeric material comprises fillers and/or reinforcing fibres, such as for example a metallised or glittered polymer.

According to a preferred aspect of the invention, as mentioned above, the auxiliary molten polymeric material from the tank 20 is then forced, through the mouth 21, into the main cavity 12 and the thrust direction S is oriented substantially transversely with respect to the filling direction I. That is to say, the thrust direction S intersects the filling direction I. In this way, the molten polymeric material inside the main cavity 12 receives from the molten polymeric material entering the tank 20 a thrust transversal to the filling direction I. This is particularly useful when any joint line J formed is parallel to the filling direction I. As mentioned above, if the joint line J has formed along a direction parallel to the filling direction I, the auxiliary molten polymeric material tends to push the primary molten polymeric material transversely through the joint line J, thus inducing an interpenetration of the interfaces of the flow fronts which have given rise to the joint line. In addition, in the event that the joint line J has formed transversely to the filling direction I, the auxiliary molten polymeric material can induce a thrust on the primary molten polymeric material such that it is forced to move in the same direction in which the joint line J is present. In this case it is possible to obtain an attenuation, especially near the inner surface 11, of the visibility of the joint line J. This attenuation is particularly appreciable when the polymeric material comprises fillers and/or reinforcing fibres, such as for example a metallised or glittered polymer.

According to a preferred aspect of the invention, the main cavity 12 is defined inside the mold body 10. Preferably, according to this aspect, the mold body 10 comprises two dies, one of which is movable to allow the removal or extraction of the finished article P from the main cavity 12. Coupled, that is to say, in a condition of closed mold body 10, the two dies identify between them the main cavity 12.

According to a preferred aspect of the invention, the tank 20 can also be defined within the mold body 10. The tank 20 which, as mentioned, is apt to act as a reserve or accumulation of primary polymeric material, can be defined as an auxiliary cavity in the mold body 10. The tank 20 preferably has a smaller volume than the main cavity 12. Furthermore, the tank 20 preferably extends mainly along a axis of extension A and the injector 30 is configured to inject the pressurized gas into the tank 20 along this axis of extension A.

According to a preferred aspect of the invention, the pressurized gas is selected from nitrogen and carbon dioxide, or mixtures thereof.

According to a preferred aspect of the invention, the primary molten polymeric material and auxiliary molten polymeric material are a thermoplastic polymer.

According to a preferred aspect of the invention, the inner surface 11 of the mold body 10, which delimits the main cavity 12, corresponds to a negative of the article P to be made or is complementary to the article P to be made.

According to a further preferred aspect of the invention, the mold body 10 comprises at least one injection mouth 50 passing through the inner surface 11. The at least one injection mouth 50 is configured to allow a fluid communication between the main cavity 12 and the environment outside the mold body 10. The position of the at least one injection mouth 50 determines the injection point with respect to the main cavity 12.

If the apparatus 1 comprises a plurality of injection mouths 50, a fraction, that is, a portion, of the primary molten polymeric material intended to be contained in the main cavity 12 is introduced into the main cavity 12 through each mouth of the plurality of injection mouths 50. That is to say, each mouth of the plurality of injection mouths 50 is configured to introduce or convey or move into the main cavity 12 a fraction, that is, a portion, of the primary molten polymeric material. The presence of a plurality of injection mouths 50 makes it possible to make the filling of the main cavity 12 more homogeneous and rapid.

According to a further preferred aspect of the invention, the apparatus 1 further comprises a feeding device 40, configured to inject or feed the primary molten polymeric material, and the auxiliary molten polymeric material, into the main cavity 12. In fact, the feeding device 40 is in fluid communication with the main cavity 12, and through this with the tank 20; the feeding device is therefore also configured to feed the tank 20. The feeding device 40 can be in fluid communication with the main cavity 12 by means of the one or more injection mouths 50. In other words, the feeding device 40 can be connected to at least one of the injection mouths 50.

Preferably, the feeding device 40 is configured to exert a variable pressure on the primary molten polymeric material inside the main cavity 12 and, consequently, on the molten polymeric material present inside the tank 20. In other words, the feeding device 40 is configured to apply a different pressure on the molten polymeric material inside the main cavity 12, for example depending on the step of the injection molding process. The feeding device 40 may be configured to exert a positive pressure on the primary molten polymeric material in the main cavity 12 to favour the compaction of the latter. The feeding device 40 can also be configured to a exert negative pressure. In other words, the feeding device 40 may be exerting a sucking or drawing action of the primary molten polymeric material from the main cavity 12.

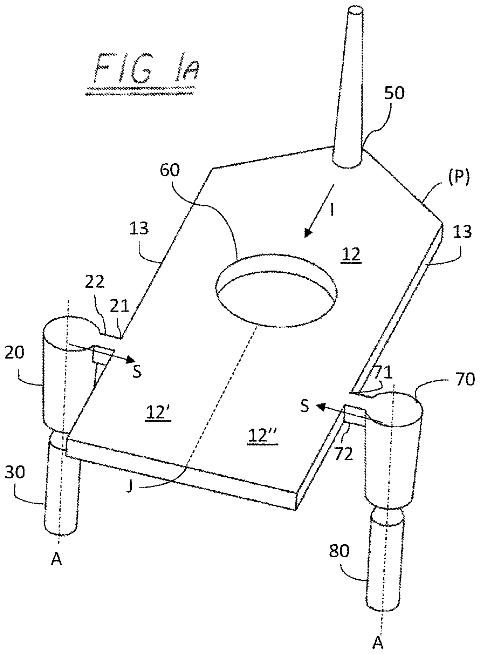

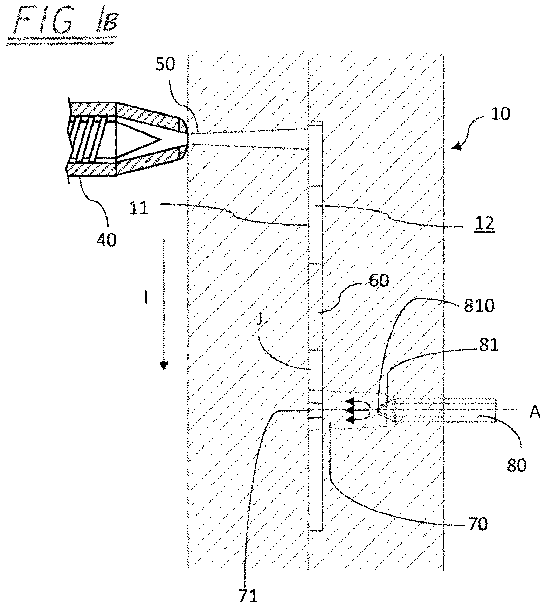

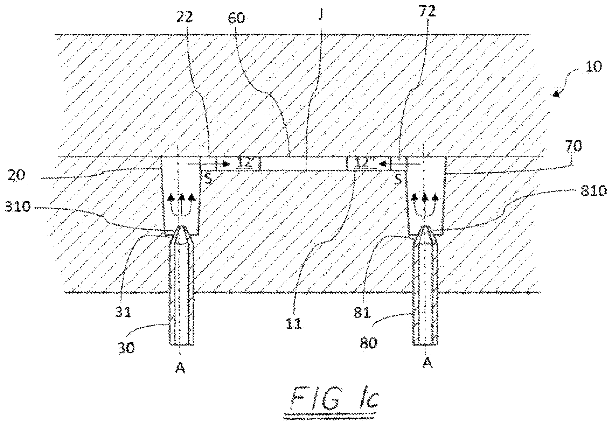

As is known, and illustrated by way of example in Figure 1B, the feeding device 40 can be of the screw type.

According to a preferred aspect of the invention, the injector 30 is contained inside the mold body 10. In other words, the mold body 10 comprises internally a seat suitable for receiving the injector 30. Preferably, the injector 30 has a first dimension of less than about 1 cm and a second dimension of less than about 5 cm. The injector 30 preferably has substantially negligible dimensions with respect to the dimensions of the mold body 10.

The injector 30 comprises a nozzle 31 having an outlet mouth 310 completely contained inside the tank 20. In this way, the outlet mouth 310 of the nozzle 31 can be, in use, completely immersed in the auxiliary molten polymeric material contained inside the tank 20. The pressurized gas is then blown directly into the auxiliary molten polymeric material inside the tank 20. In this way, the pressurized gas can be injected directly into the central region or heart of the tank 20 in which the more fluid and less viscous auxiliary molten polymeric material is contained, as it is less subject to the cooling.

According to a preferred aspect of the invention, the apparatus 1 can comprise an inlet channel 22, interposed between the tank 20 and the mouth 21. In other words, the inlet channel 22 is configured to connect in fluid communication the tank 20 with the mouth 21. The inlet channel 22 can have a decreasing cross section towards the mouth 21; that is to say that the inlet channel 22 can be configured to provide a narrowing or constriction. Preferably, the inlet channel 22 is therefore a substantially tubular body which can have a constant cross section or which narrows progressively towards the mouth 21. In this way the solidification of the auxiliary molten polymeric material present in the inlet channel 22 is favoured. Moreover, at the end of the injection molding process, that is, when the complete solidification of the primary polymeric material has taken place, the presence of a constriction between the main cavity 12 and the inlet channel 22 can simplify the detachment of the auxiliary polymeric material solidified in the inlet channel 22 and inside the tank 20 from the article P formed inside the main cavity 12. Alternatively, the inlet channel 22 can have a constant cross section; in this way it is possible to minimise the pressure drops of the auxiliary molten polymeric material entering the main cavity. Moreover, in this case with respect to the narrowing, since the cooling of the auxiliary molten polymeric material inside the inlet channel 22 is slowed down, it is possible to prolong the thrust action exerted by it.

The main cavity 12 comprises a first region 12' apt for receiving a first fraction of the primary molten polymeric material and a second region 12" apt for receiving a second fraction of the primary molten polymeric material. In other words, in the main cavity 12 a first region 12' and a second region 12" are defined, that is to say they are identifiable, respectively apt for receiving a first fraction, that is, a first flow, of the primary molten polymeric material and a second fraction, that is, a second flow, of the primary molten polymeric material. Depending on the geometry of the main cavity 12, this first region 12' and the second region 12" can be two regions of the main cavity 12 which, in the filling direction I, are arranged downstream of an obstacle 60 apt, in use, be to determine a subdivision of the primary molten polymeric material into a first fraction and a second fraction. Preferably, the first region 12' and this second region 12" can be two regions of the main cavity 12 which, in the filling direction I, are arranged downstream of an obstacle 60. In particular, the mold body 10 can comprise an obstacle 60 configured to define a projection or a protuberance in the main cavity 12. It follows that the obstacle is configured in such a way as to create a recess or a through hole in the article P to be made. This obstacle 60 can be, for example, a core or pin. If the apparatus 1 comprises a plurality of injection mouths 50, this first region 12' and second region 12" can be two regions of the main cavity 12 which, in the filling direction I, are arranged downstream respectively of a first injection mouth and a second injection mouth of the plurality of injection mouths 50. In this case, the first region 12' corresponds to a first inlet region and the second region corresponds to a second inlet region of the molten polymeric material in the main cavity 12. Preferably, the first region 12' and this second region 12" can be two regions of the main cavity 12 which, in the filling direction I, are arranged downstream respectively of a first injection mouth and a second injection mouth.

In the main cavity 12 a zone interposed between the first region 12' and the second region 12" is defined or can be identified. This interposed zone is a meeting zone or a boundary area between the first region 12' and the second region 12" in which the first fraction, that is, a first flow, of the primary molten polymeric material and a second fraction, that is, a second flow, of the primary molten polymeric material are intended to join together. It follows that the interposed zone is that zone or area of the main cavity 12 in which at least one joint line J is destined to form in article P.

According to a further preferred aspect, the tank 20 is in fluid communication with the zone interposed between the first region 12' and the second region 12". That is to say, the tank 20 is configured to be in fluid communication with the zone interposed between the first region 12' and the second region 12", that is to say, as mentioned above, with the zone or area of the cavity where it is intended to form in the article P at least one joint line J. In other words, the mouth 21 is made in the side surface 13 or in the inner surface 11 at the zone interposed between the first region 12' and the second region 12" of the main cavity. In this way, the auxiliary molten polymeric material contained inside the tank 20 is injected directly into the zone of the main cavity 12 in which the joint line J is destined to form. The auxiliary molten polymeric material then acts locally in the vicinity of the melt line J. In particular, the auxiliary molten polymeric material forces the primary molten polymeric material present in the interposed zone between the first region 12' and the second region 12" to flow through the joint line J. The interpenetration of the interfaces of the flow fronts of the first fraction and of the second fraction of primary molten polymeric material is then promoted, resulting in an increase in the molecular inter-diffusion of the molten polymeric material at the joint line J and a re-orientation of any reinforcement fibres and/or fillers present.

According to a preferred aspect of the invention, the apparatus 1 comprises a single injection mouth 50 and at least one obstacle 60. According to this same preferred aspect, the mouth 21 is made through the inner surface 11 or the side surface 13 at the interposed zone between the first region 12' and the second region 12". The auxiliary molten polymeric material can then be injected into the main cavity 12 and, consequently, not forming a part of the invention, a part of the primary polymeric material contained inside the latter can be pushed, in the opposite direction to the filling direction I up to the injection mouth 50 and, through it, it can be made to flow into the feeding device 40. That is to say, the thrust direction S can be opposite to the filling direction I. By varying the pressure applied by the feeding device 40 on the primary molten polymeric material contained inside the main cavity 12, it is possible to force the primary molten polymeric material to move towards the feeding device 40 or away from the feeding device 40. In this way the mixing of the molten polymeric material in the main cavity 12 is favoured and therefore the attenuation of any joint line J formed.

The apparatus 1 comprises at least one further tank 70, a further mouth 71, and a further injector 80; hereinafter referred to respectively as second tank 70, second mouth 71 and second injector 80. According to a further preferred aspect, the apparatus 1 also comprises a further inlet channel 72, that is, a second inlet channel 72. For the sake of clarity, reference will be made below to the tank 20 as the first tank, to the mouth 21 as the first mouth, to the injector 30 as the first injector, and to the inlet channel 22 as the first inlet channel.

The second tank 70 is structurally and functionally identical to the first tank 20 and, similarly, the second injector 80 is structurally and functionally identical to the first injector 30. In particular, the second injector 80 also comprises a respective nozzle, that is a second nozzle, 81 having a mouth 810 completely contained inside the second tank 70.

The second mouth 71 and the inlet channel 72 are also structurally and functionally identical to the first mouth 21 and the first inlet channel 22 respectively. For reasons of brevity, it is assumed that everything described with reference to the first tank 20, the first mouth 21, the first injector 30 and the first inlet channel 22 applies equally to the second tank 70, the second mouth 71, the second injector 80 and the second inlet channel 72, respectively.

According to a preferred aspect of the invention, the first injector 30 and the second injector 80 are independent; that is, they can be activated or controlled individually. It follows that the first injector 30 and the second injector 80 are configured to inject pressurized gas into the respective tank starting from different instants and/or for time periods of different duration and/or at different pressures from each other.

According to a preferred aspect of the invention, the first tank 20 is in fluid communication with the first region 12' of the main cavity 12 and the second tank is in is in fluid communication with the second region 12" of the main cavity 12 and the first mouth 21 and the second mouth 71 are arranged substantially one in front of the other, that is to say, they face each other. In other words, the first mouth 21 is made substantially in front of the second mouth 71. In other words, the first mouth 21 and the second mouth 71 are made on opposite sides of the inner surface 11 of the mold body 10. For this reason, the first injector 30 is configured to introduce auxiliary polymeric material from the first tank 20 to the first region 12' and the second injector 80 is configured to introduce auxiliary polymeric material from the second tank 70 to the second region 12". Alternatively, according to a further preferred aspect of the invention, the first tank 20 is in fluid communication with the first region 12' of the main cavity 12 and the second tank is in fluid communication with the second region 12" of the main cavity 12 and the first mouth 21 and the second mouth 71 are arranged substantially side by side. In other words, the first mouth 21 and the second mouth 71 are made on the same side as the inner surface 11.

According to one of the last two preferred aspects listed above, by completely or partially emptying the first tank 20 and the second tank 70, in an alternating manner, a flow of molten polymeric material is generated which is forced to cross the zone interposed between the first region 12' and the second region 12", therefore to cross the polymeric material J possibly formed from one tank to another. In other words, the first injector 30 and the second injector 80, positioned in the respective tanks, can be used to inject the pressurized gas alternatively, that is, intermittently, into the respective tank, thus generating a flow of primary molten polymeric material into the main cavity from one tank to the other and thus forcing the primary molten polymeric material to repeatedly cross the zone interposed between the first region 12' and the second region 12", hence the joint line J.

In fact, when a tank is partially or completely emptied, the gas supply can be interrupted, and the tank therefore becomes available to house the primary molten polymeric material coming from the main cavity 12 following the thrust action of the auxiliary molten polymeric material introduced from the other tank, which had been partially emptied. By feeding the injectors alternately, it will therefore be possible to make the primary molten polymeric material flow in two opposite directions near or at the joint line J in such a way as to allow an interpenetration of the flow fronts of the first fraction and of the second fraction of primary molten polymeric material.

According to a preferred aspect of the invention, the apparatus further comprises a heating and cooling device (not shown in the accompanying drawings). The heating and cooling device is configured to vary the temperature of the mold body 10; preferably the heating and cooling device is configured to vary the temperature of the inner surface 11. It follows that, in this way, the temperature variation effect is particularly effective on the surface layer of the article P to be made. The presence of a heating and cooling device allows improvement of the re-orientation effect of the fillers and/or of the reinforcing fibres, possibly present in the molten polymeric material, also in proximity of the surface layer of the article P to be made. For example, such a heating and cooling device may be of the type known as "variotherm" or "heat & cool" or "Rapid Heat Cycle Molding (RHCM)".

The invention also relates to a plant 2 for injection molding 1 for making an article P which comprises an apparatus 1 according to one or more of the aspects described above, primary molten polymeric material and auxiliary molten polymeric material.

In describing the plant 2, the elements of the apparatus 1 previously described retain the same reference number and are not again described in detail.

According to the invention, the placing alongside in the plant 2 of a first fraction of the primary molten polymeric material and of a second fraction of the primary molten polymeric material defines or determines a joint line J within the main cavity 12. The pressurized gas injector 30 is configured to inject the pressurized gas into the tank 20 to displace at least part of the auxiliary molten polymeric material from the tank 20 into the main cavity 12 so as to prevent entry of the pressurized gas into the main cavity 12 and in such a way that at least part of the first fraction is forced through the second fraction of material and/or at least part of the second fraction is forced through the first fraction of material. The pressurized gas injector 30 is configured to cause an interpenetration, that is to say, a mutual or reciprocal penetration, of the flow front interface of the first fraction of the primary molten polymeric material and of the second fraction of the primary molten polymeric material at the joint line J, and at the same time preventing the pressurized gas from advancing or entering the main cavity 12 of the mold.

The article which is obtained is therefore a solid article, that is to say, substantially devoid of cavities. In other words, by ensuring that the pressurized gas does not reach the cavity 12, the entire cavity 12 can be filled with the primary molten polymeric material.

A first injector 30 and a second injector 80 are configured to inject the pressurized gas into the tank 20 and the second tank 70 respectively, to displace at least part of the auxiliary molten polymeric material from the first tank 20 and from the second tank 70, respectively, into the main cavity 12 in such a way as to prevent entry of the pressurized gas into the main cavity 12 and in such a way that at least part of the first fraction is forced through the second fraction of material and/or at least part of the second fraction is forced through the first fraction of material in opposite directions. In other words, the primary molten polymeric material is pushed in opposite directions, under the action of the auxiliary molten polymeric material coming from the first tank 20 and from the second tank.

The invention also relates to a method for injection molding an article P.

In the description of the method, the elements of the apparatus 1 or of the plant 100 involved in the method and having the same function and the same structure as the elements previously described retain the same reference number and are not again described in detail.

Specifically, the above-mentioned molding method comprises the step of injecting primary molten polymeric material comprising a first fraction of primary molten polymeric material and a second fraction of primary molten polymeric material into a main cavity of a mold body. That is to say, this step consists in feeding or introducing the primary molten polymeric material into the main cavity 12. In particular, the primary molten polymeric material comprises a first fraction and a second fraction, that is, a first portion, or first flow, and a second portion, or second flow. Preferably, this step continues until the main cavity 12 is completely filled with the primary molten polymeric material.

The molding method according to the invention also comprises a step of advancing the first fraction of primary molten polymeric material and the second fraction of primary molten polymeric material along a filling direction I in such a way that the first fraction of primary molten polymeric material and the second fraction of primary molten polymeric material meet along a joint line J. In other words, at least two distinct fractions of primary molten polymeric material are formed in this step inside the main cavity 12 and these fractions of primary molten polymeric material advance in the filling direction I until they meet, that is, until they join or unite. The meeting between the front of the first fraction of primary molten polymeric material and the front of the second fraction of primary molten polymeric material determines the formation of a joint line J.

Moreover, the molding method according to the invention comprises a step which provides auxiliary molten polymeric material. That is to say, the method provides additional or reserve molten polymeric material.

Finally, the molding method according to the invention comprises a step of blowing pressurized gas into the auxiliary molten polymeric material so as to displace it into the main cavity 12, through at least one mouth in fluid communication with the main cavity 12, so as to displace at least part of the primary molten polymeric material inside the main cavity 12 and in such a way as to prevent a displacement of the pressurized gas inside the main cavity 12. In other words, the auxiliary molten polymeric material is used to exert a thrust action on the primary molten polymeric material. The primary molten polymeric material inside the main cavity 12 is then forced to move inside the main cavity 12. This movement of the primary molten polymeric material determines a redistribution of the same inside the main cavity 12 and consequently a redistribution of the material can also be obtained near or at the joint line J. In particular, the pressurized gas makes it possible to act on the molten polymeric material which is more fluid, that is, less viscous, and which offers less resistance to displacement. The molten polymeric material tends, in fact, to move along a direction of minimal resistance inside the cavity. In particular, the pressurized gas exerts a thrust on the more fluid molten polymeric material remaining outside the main cavity 12 of the mold, that is, without entering the main cavity 12.

As a result of the cooling effect due to the contact with the inner surface 11 of the mold body 10 and the increase in the viscosity of the thermoplastic polymers with the temperature, the more fluid polymeric material is concentrated in the core, that is, in a central region, of the main cavity 12 and of the at least one tank.

According to a preferred aspect of the molding method according to the invention, the primary molten polymeric material and the auxiliary molten polymeric material have the same composition. The primary and auxiliary polymeric material is a thermoplastic polymer. In particular, according to this preferred aspect, the step of providing auxiliary molten polymeric material comprises providing and filling at least one tank 20 in fluid communication with the main cavity 12 with the primary molten polymeric material. Preferably, therefore, the step of providing the primary molten polymeric material comprises the step of providing the auxiliary molten polymeric material.

According to a preferred aspect of the invention, the first fraction of primary molten polymeric material and the second fraction of primary molten polymeric material advance, respectively in a first region 12' and a second region 12" of the main cavity 12 and the joint line J is formed in a zone interposed between the first region 12' and the second region 12". According to this aspect, moreover, the displacement of at least part of the primary molten polymeric material inside the main cavity 12 occurs at the interposed zone between the first region 12' and the second region 12". In this way, the displacement of the primary molten polymeric material occurs locally where the joint line J is present. The mixing and displacement action of the primary molten polymeric material occurs locally and is therefore targeted close to or at the joint line J.

According to a preferred aspect of the invention, the displacement of part of the primary molten polymeric material inside the main cavity 12 occurs along a direction transversal or parallel to the joint line J. In other words, under the action of the auxiliary molten polymeric material, at least part of the primary molten polymeric material inside the main cavity 12 is pushed against or towards the joint line J in a direction substantially transversal or parallel to the latter. In particular, if the primary molten polymeric material is pushed transversely to the joint line J, the interpenetration of the interfaces of the flow fronts of the first and second fractions is favoured. If the primary molten polymeric material is pushed parallel to the joint line J, it is possible to obtain an attenuation of the visibility of the joint line J, especially near the inner surface of the mold body 10 which surrounds the main cavity 12.

According to a preferred aspect of the invention, the first fraction of primary molten polymeric material and the second fraction of primary molten polymeric material are injected or introduced separately into the main cavity 12 from two distinct injection points, that is, from two distinct injection mouths 50. In other words, the first fraction of primary molten polymeric material and the second fraction of primary molten polymeric material are injected or introduced into the main cavity 12 respectively through a first injection mouth and a second injection mouth; where the first injection mouth and the second injection mouth are distinct or separate from each other. For this reason, in this case, it is possible to identify a first region 12' of the main cavity 12, apt for receiving the first fraction of primary molten polymeric material, and a second region 12" of the main cavity 12, apt for receiving the second fraction of primary molten polymeric material, downstream of the first injection mouth 50 and the second injection mouth 50, respectively.

According to a preferred aspect of the invention, the first fraction and the second fraction split or separate once inside the main cavity 12. In particular, this preferred aspect provides for a step of providing an obstacle 60 and positioning it inside the main cavity 12. The primary molten polymeric material splits or subdivides into the first fraction and the second fraction of molten polymeric material at the obstacle 60. In this case, the first region 12' and the second region 12" can be two regions of the main cavity 12 which, in the filling direction I, are arranged downstream of the obstacle 60.

The auxiliary molten polymeric material is a first auxiliary molten polymeric material and the mouth 21 is a first mouth. According to this same preferred aspect, the method further comprises the steps of providing a second auxiliary molten polymeric material and blowing pressurized gas into the second auxiliary molten polymeric material so as to feed said second auxiliary molten polymeric material towards the main cavity 12 through at least a second mouth 71 in fluid communication with the main cavity 12 so as to prevent a displacement of the pressurized gas inside the main cavity 12 and to displace part of the primary molten polymeric material inside the main cavity 12. It follows that the second auxiliary molten polymeric material is also pushed, thanks to the pressurized gas, into the main cavity 12 in such a way as to exert in turn a thrust on the primary molten polymeric material. In this way the mixing of the primary molten polymeric material in the main cavity 12 is further promoted and it is therefore possible to further mitigate the presence of the joint line J.

The step of blowing pressurized gas into the first auxiliary molten polymeric material so as to feed said first auxiliary molten polymeric material towards the main cavity occurs along a thrust direction S in a first direction and the step of blowing pressurized gas into the second auxiliary molten polymeric material so as to feed said second auxiliary molten polymeric material towards the main cavity 12 occurs substantially along the same thrust direction S, or a direction substantially parallel to the thrust direction S, but in a second orientation opposite with respect to the first orientation.

According to a preferred aspect of the invention, the method provides at least one feeding device 40 of the primary molten polymeric material. According to this aspect, the step of injecting primary molten polymeric material comprising a first fraction of primary molten polymeric material and a second fraction of primary molten polymeric material into the main cavity 12 of the mold body is carried out through the feeding device 40.

According to a further preferred aspect of the invention, the step of blowing pressurized gas into the auxiliary molten polymeric material so as to feed the auxiliary molten polymeric material towards the main cavity 12 through at least one injection mouth 50 in fluid communication with the main cavity 12 in order to displace part of the primary molten polymeric material into the main cavity 12, is followed by a step of re-entering or withdrawing part of the primary molten polymeric material from the main cavity 12 inside the feeding device 40. In other words, part of the primary molten polymeric material can be displaced under the action of the pressurized gas inside the feeding device 40. Preferably, the method further comprises a step of controlling the pressure that can be exerted on the primary molten polymeric material inside the main cavity 12 by the pressurized gas, therefore by the auxiliary molten polymeric material, and by the feeding device 40. Even more preferably, this control step can provide for generating, in an alternating manner, a pressure on the primary molten polymeric material inside the main cavity 12 through the pressurized gas, therefore by the auxiliary molten polymeric material, and the feeding device 40. That is to say, the pressure on the primary molten polymeric material inside the main cavity 12 is exerted in turn, or in rotation, by the pressurized gas or feeding device 40. As mentioned above, when the pressure is exerted by the pressurized gas on the auxiliary molten polymeric material, the primary molten polymeric material can move inside the feeding device 40 and when the latter exerts a pressure, the primary molten polymeric material can move inside, for example, the tank 20. In this way, it is possible to generate a motion or movement along opposite directions of the primary molten polymeric material inside the main cavity 12 which promotes the remixing thereof.

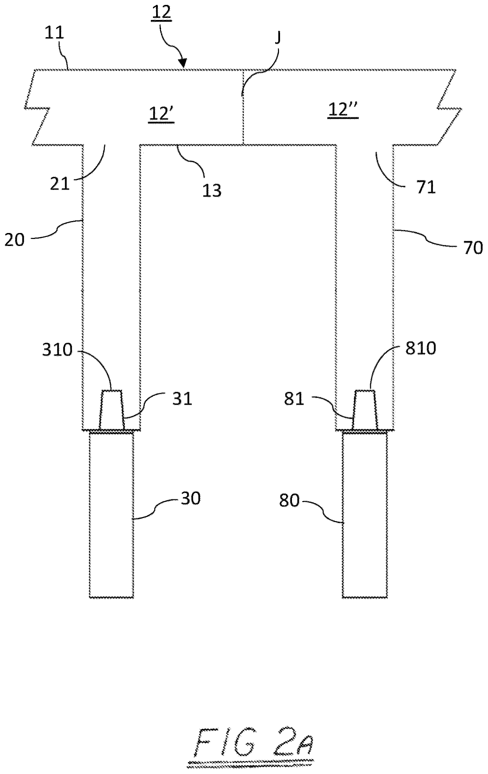

In addition to the above-mentioned tank 20, the step of providing auxiliary molten polymeric material comprises providing a further, or second, tank 70 in fluid communication with the main cavity and filling the latter with the second primary molten polymeric material. This is illustrated, by way of example, in Figure 2A. The second auxiliary molten polymeric material contained inside the second tank 70 is, that is to say, corresponds to, the auxiliary polymeric material. Preferably, therefore, the step of providing the primary molten polymeric material comprises the step of providing the auxiliary molten polymeric material to the first tank 20 and to the second tank 70. The auxiliary molten polymeric material contained in the first tank 20 and in the second tank 70 are the first auxiliary molten polymeric material and the second auxiliary molten polymeric material, respectively. In particular, according to this preferred aspect, the step of providing auxiliary molten polymeric material comprises providing and filling at least the first tank 20 and the second tank, in fluid communication with the main cavity 12, with the primary molten polymeric material. Preferably, therefore, the step of providing the primary molten polymeric material comprises the step of providing the auxiliary molten polymeric material.

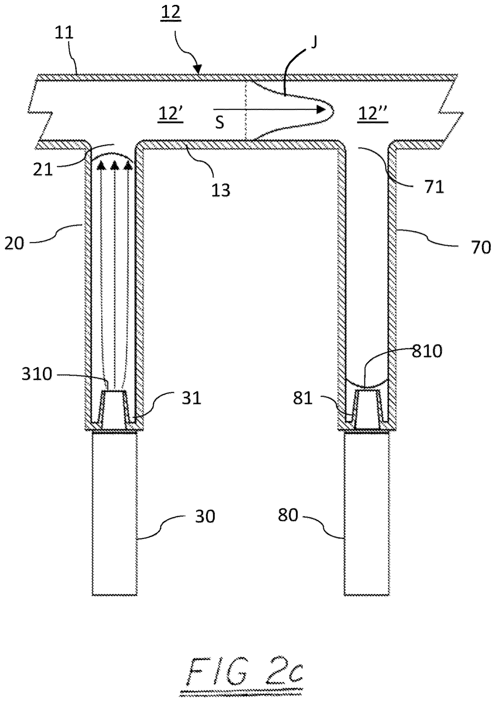

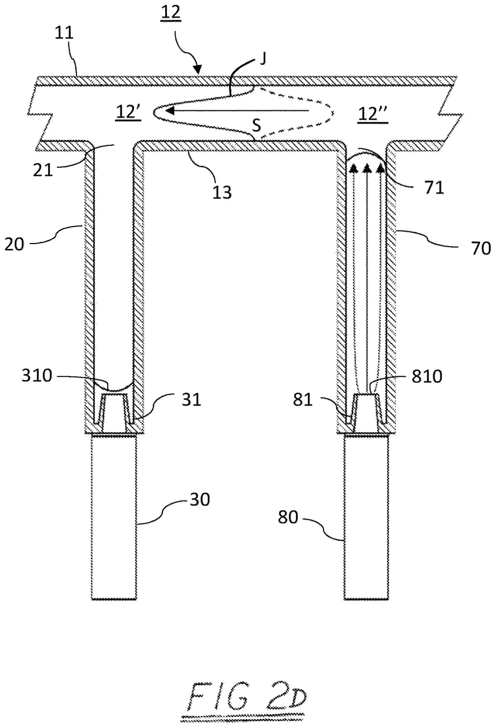

According to a preferred aspect of the invention, as illustrated for example in Figures 2C and 2D, the step of blowing pressurized gas into the first auxiliary molten polymeric material and the step of blowing pressurized gas into the second auxiliary molten polymeric material take place in an alternating fashion. In other words, firstly the pressurized gas is blown into the first auxiliary molten polymeric material and then the pressurized gas is blown into the second auxiliary molten polymeric material and vice versa. In other words, the pressurized gas is periodically blown into the first molten polymeric material and, subsequently, into the second auxiliary molten polymeric material. Therefore, preferably, in turn or in rotation, the first tank 20 and the second tank 70 are completely or partially emptied. Preferably, this alternation is repeated cyclically. When a tank is partially or completely emptied, the pressurized gas supply can be interrupted and the tank therefore becomes available to receive the primary polymeric material coming from the main cavity 12 following the action of the pressurized gas introduced into the other tank. By blowing in pressurized gas alternately, it will be possible to move the primary molten polymeric material near the joint line J. The different pressure generated by the pressurized gas inside the tanks forces the primary molten polymeric material to flow through or along the joint line J promoting an interpenetration of the flow fronts, increasing the molecular inter-diffusion and causing a re-orientation of any reinforcement present. Even more preferably, this occurs concurrently with the exerting of positive pressure on the primary molten polymeric material in the main cavity 12, that is, during the compacting step.

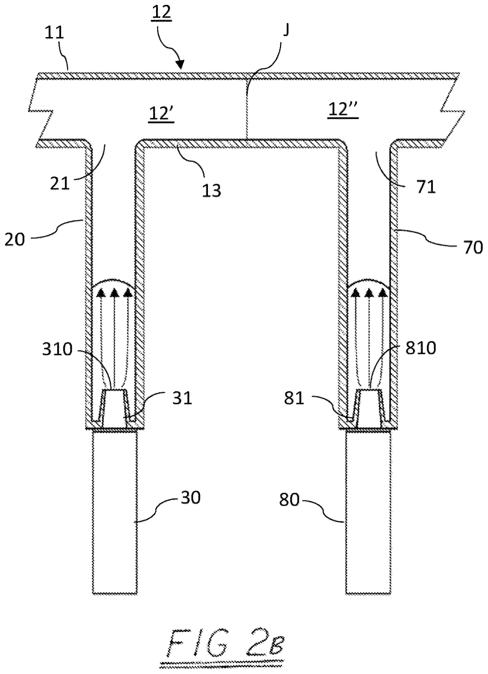

According to a preferred aspect of the invention, the step of blowing pressurized gas into the first auxiliary molten polymeric material and the step of blowing pressurized gas into the second auxiliary molten polymeric material take place simultaneously. As shown for example in Figure 2B, the first auxiliary molten polymeric material and the second auxiliary molten polymeric material are at the same time conveyed or pushed into the main cavity 12. In other words, the pressurized gas can be injected simultaneously into the first auxiliary molten polymeric material and into the second auxiliary molten polymeric material. Preferably, this means that the pressurized gas is injected simultaneously into the first tank 20 and into the second tank 70, simultaneously emptying, at least partially, the first tank 20 and the second tank 70.

Preferably, the step of simultaneously blowing pressurized gas into the first auxiliary molten polymeric material and into the second auxiliary molten polymeric material can be carried out at the end of the step of injecting the primary molten polymeric material into the main cavity 12. The pressurized gas is injected into all the tanks and partially or completely empties the core, whilst the pressurized gas 12 remains entirely outside the main cavity 12, displacing the auxiliary molten polymeric material inside the main cavity 12, exploiting the natural shrinkage that the molten polymeric material exhibits during cooling and the compressibility of the molten polymeric material in the molten state.

In this way, thanks to the combination of the use of secondary molten polymeric material and the configuration of the gas injector, it is possible to use gas as a thrust member and at the same time obtain a solid article without internal cavities.

Preferably, the step of simultaneously blowing pressurized gas into the first auxiliary molten polymeric material and into the second auxiliary molten polymeric material can also be carried out after alternating the feeding of pressurized gas into the first auxiliary molten polymeric material and into the second auxiliary molten polymeric material. In this way it is possible to perform a synchronous compaction action. This action allows the control of the volumetric shrinkage of the primary polymeric material during its solidification to be improved. In addition, the emptying, albeit partial, of the first tank 20 and of the second tank 70 facilitates the removal with respect to the remaining polymeric material solidified in the cavity of the remaining polymeric material solidified in the tanks.

According to a preferred aspect of the invention, the method further provides a step of lowering or raising the temperature of the mold body 10. Preferably, this step provides for lowering or raising the temperature of the mold body near or at the main cavity 12. In particular, the lowering of the temperature favours and speeds up the solidification of the primary molten polymeric material inside the main cavity 12 and of the auxiliary primary molten polymeric material inside the first tank 20 and/or inside the second tank 70. Furthermore, a step of lowering the temperature of the mold body 10 is preferably carried out at the end of the operations or steps described up to now.

The invention has thus far been described with reference to its embodiments. It is to be understood that there may be other embodiments pertaining to the same inventive core, all falling within the scope of protection of the claims set forth below.

## Claims

1. Injection molding apparatus (1) for making an article (P) comprising:
- a mold body (10) having an inner surface (11) defining a main cavity (12) apt in use to contain primary molten polymeric material, wherein said main cavity (12) comprises a first region (12') apt to receive a first fraction of said primary molten polymeric material and a second region (12") apt to receive a second fraction of said primary molten polymeric material;
- a first tank (20) in fluid communication with said main cavity (12) by means of a first mouth (21) passing through said inner surface (11) and apt in use to contain auxiliary molten polymeric material;
- a first pressurized gas injector (30), said first injector (30) being in communication with said first tank (20) and configured to inject said pressurized gas into said first tank (20) to displace at least part of said auxiliary molten polymeric material from said first tank (20) into said main cavity (12) and wherein
said first pressurized gas injector (30) comprises a first nozzle (31) having an outlet (310) completely contained within said first tank (20) in order to inject or push the auxiliary molten polymeric material into the main cavity (12) in such a way that at least part of said auxiliary molten polymeric material acts as a barrier against an entry of said pressurized gas into the main cavity (12);
and wherein said injection molding apparatus (1) further comprises:
- a second tank (70) in fluid communication with said main cavity (12) by means of a second mouth (71) passing through said inner surface (11) and apt in use to contain auxiliary molten polymeric material;
- a second pressurized gas injector (80), wherein said second injector (80) comprises a second nozzle (81) having an outlet (810) completely contained within said second tank (70) such that said second injector (80) is in communication with said second tank (70) to inject the pressurized gas into said second tank (70) to displace at least part of the auxiliary molten polymeric material from said second tank (70) into said main cavity (12) in such a way as to prevent an entry of said pressurized gas into the main cavity (12);
wherein said first tank (20) is in fluid communication with said first region (12') and said second tank (70) is in fluid communication with said second region (12") and wherein said first mouth (21) and said second mouth (71) are arranged substantially one in front of the other or so as to face each other.

2. Injection molding apparatus (1) for making an article (P) according to claim 1, wherein said main cavity (12) is at least extended along at least one filling direction (I) of said primary molten polymeric material, and said inner surface (11) comprises at least one side surface (13) which delimits said main cavity (12) at least around said filling direction (I) and wherein said mouth (21) passes through said side surface (13).

3. Injection molding apparatus (1) for making an article (P) according to claim 1 or 2, wherein said pressurized gas injector (30) is configured to inject said pressurized gas into said tank (20) to displace at least part of said auxiliary molten polymeric material from said tank (20) into said main cavity (12) along a thrust direction (S); wherein said thrust direction (S) is oriented substantially transversely with respect to said filling direction (I), or intersects said filling direction (I).

4. Injection molding apparatus (1) for making an article (P) according to any one of the preceding claims, wherein the inner surface (11) corresponds to a negative of, or is complementary to, said article (P) to be made.

5. Injection molding apparatus (1) for making an article (P) according to anyone of the previous claims, wherein said tank (20) communicates with an area interposed between said first inlet region (12') and said second inlet region (12").

6. Injection molding apparatus (1) for making an article (P) according to any one of the preceding claims, wherein said main cavity (12) and said tank (20) are defined within said mold body (10).

7. Injection molding apparatus (1) for making an article (P) according to any one of the preceding claims, comprising an inlet channel (22), interposed between said tank (20) and said mouth (21) and wherein said inlet channel (22) has a constant cross-section or one which gradually narrows towards said inlet (21).

8. Injection molding apparatus (1) according to any one of the preceding claims , wherein said second tank (70) is defined within said mold body (10).

9. Injection molding apparatus (1) according to any one of the preceding claims in combination with claim 7, wherein said inlet channel (22) is a first inlet channel and comprising a second inlet channel (72) interposed between said second tank (70) and said second mouth (71) and wherein said second inlet channel (72) has a constant cross-section or one which narrows progressively towards said second mouth (71).

10. Injection molding apparatus (1) for making an article (P) according to any one of the preceding claims, comprising a cooling, heating and cooling device configured to cool or heat the mold body (10).

11. Plant (2) for injection molding (1) for making an article (P) comprising an injection molding apparatus (1) for making an article (P) according to any one of the preceding claims and primary molten polymeric material, which comprises a first fraction of said primary molten polymeric material and a second fraction of said primary molten polymeric material, and auxiliary molten polymeric material; where the placing alongside of the first fraction of said primary molten polymeric material and of the second fraction of said primary molten polymeric material defines or determines a melt line (J) within said main cavity (12); and wherein said pressurized gas injector (30) is configured to inject said pressurized gas into said tank (20) to displace at least part of said auxiliary molten polymeric material from said tank (20) into said main cavity (12), and wherein the pressurized gas injector (30) comprises a nozzle (31) having an outlet (310) completely contained within said tank (20) in order to inject or push the auxiliary molten polymeric material into the main cavity (12) in such a way that at least part of said primary molten polymeric material acts as a barrier against a penetration of said pressurized gas into the main cavity (12) and in such a way that at least part of said first fraction is forced through said second fraction of material and/or at least part of said second fraction is forced through said first fraction of material;
wherein said tank (20) is a first tank, said mouth (21) is a first mouth, said injector (30) is a first injector, and said nozzle (31) is a first nozzle; and
wherein the further injection molding apparatus (1) further comprises:
- a second tank (70) in fluid communication with said main cavity (12) by means of a second mouth (71) passing through said inner surface (11) and apt in use to contain auxiliary molten polymeric material;
- a second pressurized gas injector (80), wherein said second injector (80) comprises a second nozzle (81) having an outlet (810) completely contained within said second tank (70) such that said second injector (80) is in communication with said second tank (70) to inject the pressurized gas into said second tank (70) to displace at least part of the auxiliary molten polymeric material from said second tank (70) into said main cavity (12) in such a way as to prevent an entry of said pressurized gas into the main cavity (12);
wherein the main cavity (12) of the injection moulding apparatus (1) comprises a first region (12') apt to receive the first fraction of said primary molten polymeric material and a second region (12") apt to receive said second fraction of said primary molten polymeric material;
wherein said first tank (20) is in fluid communication with said first region (12') and said second tank (70) is in fluid communication with said second region (12") and wherein said first mouth (21) and said second mouth (71) are arranged substantially one in front of the other or so as to face each other.

12. Method of injection molding of an article (P) comprising the steps of:
- injecting primary molten polymeric material comprising a first fraction of primary molten polymeric material and a second fraction of primary molten polymeric material into a main cavity (12) of a mold body (10),
- advancing said first fraction of primary molten polymeric material and said second fraction of primary molten polymeric material along a filling direction (I) in such a way that said first fraction of primary molten polymeric material and said second fraction of primary molten polymeric material meet along a melt line (J);
- providing auxiliary molten polymeric material;
- blowing pressurized gas into said auxiliary molten polymeric material so as to feed said auxiliary molten polymeric material towards said main cavity (12) through at least one mouth (21) in fluid communication with said main cavity (12) so as to displace part of the primary molten polymeric material inside said main cavity (12) and in such a way as to prevent an entry of said pressurized gas inside said main cavity (12);
wherein auxiliary molten polymeric material is a first auxiliary molten polymeric material and said mouth (21) is a first mouth, and said step of blowing pressurized gas into said first auxiliary molten polymeric material so as to feed said first auxiliary molten polymeric material towards said main cavity (12) takes place along a thrust direction (S) in a first orientation;
and wherein the method also includes the steps of:
- providing a second auxiliary molten polymeric material;
- blowing pressurized gas into said second auxiliary molten polymeric material so as to feed said second auxiliary molten polymeric material towards said main cavity (12) through at least a second mouth (71) in fluid communication with said main cavity (12) so as to displace part of the primary molten polymeric material into said main cavity (12) and in such a way as to prevent an entrance of pressurized gas into said main cavity (12), and said step of blowing pressurized gas into said second auxiliary molten polymeric material in such a way as to feed said second auxiliary molten polymeric material through said main cavity (12) occurs substantially along said thrust direction (S) in a second orientation opposite with respect to said first orientation.

13. Method of injection molding of an article (P) according to claim 12, wherein said first fraction of primary molten polymeric material and said second fraction of primary molten polymeric material respectively advance in a first region (12') and a second region (12") of said main cavity (12) and said melt line (J) is formed in a zone interposed between said first region (12') and said second region (12");
and wherein the displacement of part of the primary molten polymeric material within said main cavity (12) occurs in correspondence with said zone interposed between said first region (12') and said second region (12").

14. Method of injection molding of an article (P) according to claim 12 or 13, wherein the displacement of part of the primary molten polymeric material within said main cavity (12) occurs along a direction transverse or parallel to said melt line (J).

15. Polymeric material injection molding method of an article (P) according to any one of claims 12 to 14, wherein said step of blowing pressurized gas into said first auxiliary molten polymeric material and said step of blowing pressurized gas into said second auxiliary molten polymeric material occur simultaneously or alternately.

16. Polymeric material injection molding method of an article (P) according to any one of claims 12 to 15, wherein the pressurized gas is injected without forming empty spaces in the primary molten polymeric material and/or wherein said article (P) is a solid article.

## Patentansprüche

1. Spritzgusseinrichtung (1) zum Herstellen eines Artikels (P), umfassend:
- einen Gusskörper (10), der eine innere Oberfläche (11) aufweist, die einen Haupthohlraum (12) definiert, der im Gebrauch dazu geeignet ist, primäres geschmolzenes Polymermaterial zu enthalten, wobei der Haupthohlraum (12) einen ersten Bereich (12'), der dazu geeignet ist, einen ersten Anteil des primären geschmolzenen Polymermaterials aufzunehmen, und einen zweiten Bereich (12"), der dazu geeignet ist, einen zweiten Anteil des primären geschmolzenen Polymermaterials aufzunehmen, umfasst;
- einen ersten Tank (20), der mittels einer ersten Öffnung (21), die durch die innere Oberfläche (11) verläuft, in Fluidverbindung mit dem Haupthohlraum (12) steht und im Gebrauch dazu geeignet ist, zusätzliches geschmolzenes Polymermaterial zu enthalten;
- einen ersten Druckgaseinspritzer (30), wobei der erste Einspritzer (30) mit dem ersten Tank (20) in Verbindung steht und konfiguriert ist, um das Druckgas in den ersten Tank (20) einzuspritzen, um mindestens einen Teil des zusätzlichen geschmolzenen Polymermaterials aus dem ersten Tank (20) in den Haupthohlraum (12) zu verdrängen, und wobei
der erste Druckgaseinspritzer (30) eine erste Düse (31) umfasst, die einen Auslass (310) aufweist, der vollständig in dem ersten Tank (20) enthalten ist, um das zusätzliche geschmolzene Polymermaterial auf eine Weise, dass mindestens ein Teil des zusätzlichen geschmolzenen Polymermaterials als Barriere gegen einen Eintritt des Druckgases in den Haupthohlraum (12) wirkt, in den Haupthohlraum (12) einzuspritzen oder zu pressen;
und wobei die Spritzgusseinrichtung (1) ferner umfasst:
- einen zweiten Tank (70), der mittels einer zweiten Öffnung (71), die durch die innere Oberfläche (11) verläuft, in Fluidverbindung mit dem Haupthohlraum (12) steht und im Gebrauch dazu geeignet ist, zusätzliches geschmolzenes Polymermaterial zu enthalten;
- einen zweiten Druckgaseinspritzer (80), wobei der zweite Einspritzer (80) eine zweite Düse (81) umfasst, die einen Auslass (810) aufweist, der vollständig in dem zweiten Tank (70) enthalten ist, so dass der zweite Einspritzer (80) mit dem zweiten Tank (70) in Verbindung steht, um das Druckgas in den zweiten Tank (70) einzuspritzen, um mindestens einen Teil des zusätzlichen geschmolzenen Polymermaterials auf eine Weise, dass ein Eintritt des Druckgases in den Haupthohlraum (12) verhindert wird, aus dem zweiten Tank (70) in den Haupthohlraum (12) zu verdrängen;
wobei der erste Tank (20) in Fluidverbindung mit dem ersten Bereich (12') steht und der zweite Tank (70) in Fluidverbindung mit dem zweiten Bereich (12") steht und wobei die erste Öffnung (21) und die zweite Öffnung (71) im Wesentlichen voreinander oder einander zugewandt angeordnet sind.

2. Spritzgusseinrichtung (1) zum Herstellen eines Artikels (P) nach Anspruch 1, wobei sich der Haupthohlraum (12) mindestens entlang mindestens einer Füllrichtung (I) des primären geschmolzenen Polymermaterials erstreckt und die innere Oberfläche (11) mindestens eine seitliche Oberfläche (13) umfasst, die den Haupthohlraum (12) mindestens um die Füllrichtung (I) herum begrenzt, und wobei die Öffnung (21) durch die seitliche Oberfläche (13) verläuft.

3. Spritzgusseinrichtung (1) zum Herstellen eines Artikels (P) nach Anspruch 1 oder 2, wobei der Druckgaseinspritzer (30) konfiguriert ist, um das Druckgas in den Tank (20) einzuspritzen, um mindestens einen Teil des zusätzlichen geschmolzenen Polymermaterials aus dem Tank (20) entlang einer Schubrichtung (S) in den Haupthohlraum (12) zu verdrängen; wobei die Schubrichtung (S) im Wesentlichen quer in Bezug auf die Füllrichtung (I) ausgerichtet ist oder die Füllrichtung (I) schneidet.

4. Spritzgusseinrichtung (1) zum Herstellen eines Artikels (P) nach einem der vorstehenden Ansprüche, wobei die innere Oberfläche (11) einem Negativ des herzustellenden Artikels (P) entspricht oder komplementär dazu ist.

5. Spritzgusseinrichtung (1) zum Herstellen eines Artikels (P) nach einem der vorstehenden Ansprüche, wobei der Tank (20) mit einem Bereich in Verbindung steht, der zwischen dem ersten Einlassbereich (12') und dem zweiten Einlassbereich (12") liegt.

6. Spritzgusseinrichtung (1) zum Herstellen eines Artikels (P) nach einem der vorstehenden Ansprüche, wobei der Haupthohlraum (12) und der Tank (20) innerhalb des Gusskörpers (10) definiert sind.

7. Spritzgusseinrichtung (1) zum Herstellen eines Artikels (P) nach einem der vorstehenden Ansprüche, die einen Einlasskanal (22) umfasst, der zwischen dem Tank (20) und der Öffnung (21) angeordnet ist, und wobei der Einlasskanal (22) einen konstanten Querschnitt oder einen Querschnitt, der sich zu dem Einlass (21) hin allmählich verengt, aufweist.

8. Spritzgusseinrichtung (1) nach einem der vorstehenden Ansprüche, wobei der zweite Tank (70) innerhalb des Gusskörpers (10) definiert ist.

9. Spritzgusseinrichtung (1) nach einem der vorstehenden Ansprüche in Kombination mit Anspruch 7, wobei der Einlasskanal (22) ein erster Einlasskanal ist, und die einen zweiten Einlasskanal (72) umfasst, der zwischen dem zweiten Tank (70) und der zweiten Öffnung (71) angeordnet ist, und wobei der zweite Einlasskanal (72) einen konstanten Querschnitt oder einen Querschnitt, der sich in Richtung der zweiten Öffnung (71) fortschreitend verengt, aufweist.

10. Spritzgusseinrichtung (1) zum Herstellen eines Artikels (P) nach einem der vorstehenden Ansprüche, die eine Kühl-, Heiz- und Kühlvorrichtung, die zum Kühlen oder Erhitzen des Gusskörpers (10) konfiguriert ist, umfasst.

11. Anlage (2) zum Spritzgießen (1) zum Herstellen eines Artikels (P), die eine Spritzgusseinrichtung (1) zum Herstellen eines Artikels (P) nach einem der vorstehenden Ansprüche und primäres geschmolzenes Polymermaterial, das einen ersten Anteil des primären geschmolzenen Polymermaterials und einen zweiten Anteil des primären geschmolzenen Polymermaterials umfasst, und zusätzliches geschmolzenes Polymermaterial umfasst; wobei das Platzieren des ersten Anteils des primären geschmolzenen Polymermaterials und des zweiten Anteils des primären geschmolzenen Polymermaterials nebeneinander eine Schmelzlinie (J) innerhalb des Haupthohlraums (12) definiert oder bestimmt und wobei der Druckgaseinspritzer (30) konfiguriert ist, um das Druckgas in den Tank (20) einzuspritzen, um mindestens einen Teil des zusätzlichen geschmolzenen Polymermaterials aus dem Tank (20) in den Haupthohlraum (12) zu verdrängen, und wobei der Druckgaseinspritzer (30) eine Düse (31) umfasst, die einen Auslass (310) aufweist, der vollständig in dem Tank (20) enthalten ist, um das zusätzliche geschmolzene Polymermaterial auf eine Weise, dass mindestens ein Teil des primären geschmolzenen Polymermaterials als Barriere gegen ein Eindringen des Druckgases in den Haupthohlraum (12) wirkt, und auf eine Weise, dass mindestens ein Teil des ersten Anteils durch den zweiten Anteil von Material gepresst wird und/oder mindestens ein Teil des zweiten Anteils durch den ersten Anteil von Material gedrängt wird, in den Haupthohlraum (12) einzuspritzen oder zu pressen;
wobei der Tank (20) ein erster Tank ist, die Öffnung (21) eine erste Öffnung ist, der Einspritzer (30) ein erster Einspritzer ist und die Düse (31) eine erste Düse ist und
wobei die weitere Spritzgusseinrichtung (1) ferner umfasst:
- einen zweiten Tank (70), der mittels einer zweiten Öffnung (71), die durch die innere Oberfläche (11) verläuft, in Fluidverbindung mit dem Haupthohlraum (12) steht und im Gebrauch dazu geeignet ist, zusätzliches geschmolzenes Polymermaterial zu enthalten;
- einen zweiten Druckgaseinspritzer (80), wobei der zweite Einspritzer (80) eine zweite Düse (81) umfasst, die einen Auslass (810) aufweist, der vollständig in dem zweiten Tank (70) enthalten ist, so dass der zweite Einspritzer (80) mit dem zweiten Tank (70) in Verbindung steht, um das Druckgas in den zweiten Tank (70) einzuspritzen, um mindestens einen Teil des zusätzlichen geschmolzenen Polymermaterials auf eine Weise, dass ein Eintritt des Druckgases in den Haupthohlraum (12) verhindert wird, aus dem zweiten Tank (70) in den Haupthohlraum (12) zu verdrängen;
wobei der Haupthohlraum (12) der Spritzgusseinrichtung (1) einen ersten Bereich (12'), der dazu geeignet ist, den ersten Anteil des primären geschmolzenen Polymermaterials aufzunehmen, und einen zweiten Bereich (12"), der dazu geeignet ist, den zweiten Anteil des primären geschmolzenen Polymermaterials aufzunehmen, umfasst;
wobei der erste Tank (20) in Fluidverbindung mit dem ersten Bereich (12') steht und der zweite Tank (70) in Fluidverbindung mit dem zweiten Bereich (12") steht und wobei die erste Öffnung (21) und die zweite Öffnung (71) im Wesentlichen voreinander oder einander zugewandt angeordnet sind.

12. Verfahren zum Spritzgießen eines Artikels (P), umfassend die Schritte:
- Einspritzen von primärem geschmolzenem Polymermaterial, das einen ersten Anteil von primärem geschmolzenem Polymermaterial und einen zweiten Anteil von primärem geschmolzenem Polymermaterial umfasst, in einen Haupthohlraum (12) eines Gusskörpers (10),
- Vorschieben des ersten Anteils von primärem geschmolzenem Polymermaterial und des zweiten Anteils von primärem geschmolzenem Polymermaterial entlang einer Füllrichtung (I) auf eine Weise, dass sich der erste Anteil von primärem geschmolzenem Polymermaterial und der zweite Anteil von primärem geschmolzenem Polymermaterial entlang einer Schmelzlinie (J) treffen;
- Bereitstellen von zusätzlichem geschmolzenem Polymermaterial;
- Einblasen von Druckgas in das zusätzliche geschmolzene Polymermaterial, um das zusätzliche geschmolzene Polymermaterial durch mindestens eine Öffnung (21), die in Fluidverbindung mit dem Haupthohlraum (12) steht, in Richtung des Haupthohlraums (12) zu leiten, um einen Teil des primären geschmolzenen Polymermaterials innerhalb des Haupthohlraums (12) zu verdrängen, und auf eine Weise, dass ein Eindringen des Druckgases in den Haupthohlraum (12) verhindert wird;
wobei das zusätzliche geschmolzene Polymermaterial ein erstes zusätzliches geschmolzenes Polymermaterial ist und die Öffnung (21) eine erste Öffnung ist und der Schritt des Einblasens von Druckgas in das erste zusätzliche geschmolzene Polymermaterial, um das erste zusätzliche geschmolzene Polymermaterial in Richtung des Haupthohlraums (12) zu leiten, entlang einer Schubrichtung (S) in einer ersten Ausrichtung erfolgt;
und wobei das Verfahren außerdem die Schritte einschließt:
- Bereitstellen eines zweiten zusätzlichen geschmolzenen Polymermaterials;
- Einblasen von Druckgas in das zweite zusätzliche geschmolzene Polymermaterial, um das zweite zusätzliche geschmolzene Polymermaterial in Richtung des Haupthohlraums (12) durch mindestens eine zweite Öffnung (71) zu leiten, die in Fluidverbindung mit dem Haupthohlraum (12) steht, um einen Teil des primären geschmolzenen Polymermaterials in den Haupthohlraum (12) zu verdrängen, und auf eine Weise, dass ein Eintritt von Druckgas in den Haupthohlraum (12) verhindert wird, und wobei der Schritt des Einblasens von Druckgas in das zweite zusätzliche geschmolzene Polymermaterial auf eine Weise erfolgt, dass das zweite zusätzliche geschmolzene Polymermaterial im Wesentlichen entlang der Schubrichtung (S) in einer zweiten Ausrichtung, die in Bezug auf die erste Ausrichtung entgegengesetzt ist, durch den Haupthohlraum (12) geleitet wird.

13. Verfahren zum Spritzgießen eines Artikels (P) nach Anspruch 12, wobei der erste Anteil des primären geschmolzenen Polymermaterials und der zweite Anteil des primären geschmolzenen Polymermaterials jeweils in einen ersten Bereich (12') und einen zweiten Bereich (12") des Haupthohlraums (12) vorgeschoben werden und die Schmelzlinie (J) in einer Zone ausgebildet wird, die zwischen dem ersten Bereich (12') und dem zweiten Bereich (12") liegt;
und wobei die Verdrängung eines Teils des primären geschmolzenen Polymermaterials innerhalb des Haupthohlraums (12) in Übereinstimmung mit der Zone erfolgt, die zwischen dem ersten Bereich (12') und dem zweiten Bereich (12") liegt.

14. Verfahren zum Spritzgießen eines Artikels (P) nach Anspruch 12 oder 13, wobei die Verdrängung eines Teils des primären geschmolzenen Polymermaterials innerhalb des Haupthohlraums (12) entlang einer Richtung quer oder parallel zu der Schmelzlinie (J) erfolgt.

15. Polymermaterialspritzgießverfahren für einen Artikel (P) nach einem der Ansprüche 12 bis 14, wobei der Schritt des Einblasens von Druckgas in das erste geschmolzene Polymermaterial und der Schritt des Einblasens von Druckgas in das zweite geschmolzene Polymermaterial gleichzeitig oder abwechselnd erfolgen.

16. Polymermaterialspritzgießverfahren für einen Artikel (P) nach einem der Ansprüche 12 bis 15, wobei das Druckgas eingespritzt wird, ohne im primären geschmolzenen Polymermaterial Leerräume auszubilden, und/oder wobei der Artikel (P) ein Festkörper ist.

## Revendications

1. Appareil de moulage par injection (1) destiné à fabriquer un article (P) comprenant :
- un corps de moule (10) ayant une surface interne (11) définissant une cavité principale (12) apte, lors de l'utilisation, à contenir un matériau polymère fondu primaire, dans lequel ladite cavité principale (12) comprend une première région (12') apte à recevoir une première fraction dudit matériau polymère fondu primaire et une seconde région (12") apte à recevoir une seconde fraction dudit matériau polymère fondu primaire ;
- un premier réservoir (20) en communication fluidique avec ladite cavité principale (12) au moyen d'une première embouchure (21) traversant ladite surface interne (11) et apte, lors de l'utilisation, à contenir un matériau polymère fondu auxiliaire ;
- un premier injecteur (30) de gaz sous pression, ledit premier injecteur (30) étant en communication avec ledit premier réservoir (20) et configuré pour injecter ledit gaz sous pression dans ledit premier réservoir (20) afin de déplacer au moins une partie dudit matériau polymère fondu auxiliaire dudit premier réservoir (20) dans ladite cavité principale (12), et dans lequel
ledit premier injecteur de gaz sous pression (30) comprend une première buse (31) ayant une sortie (310) entièrement contenue dans ledit premier réservoir (20) afin d'injecter ou de pousser le matériau polymère fondu auxiliaire dans la cavité principale (12) de telle sorte qu'au moins une partie dudit matériau polymère fondu auxiliaire agit en tant que barrière contre une entrée dudit gaz sous pression dans la cavité principale (12) ;
et dans lequel ledit appareil de moulage par injection (1) comprend en outre :
- un second réservoir (70) en communication fluidique avec ladite cavité principale (12) au moyen d'une seconde embouchure (71) traversant ladite surface interne (11) et apte, lors de l'utilisation, à contenir un matériau polymère fondu auxiliaire ;
- un second injecteur (80) de gaz sous pression, dans lequel ledit second injecteur (80) comprend une seconde buse (81) ayant une sortie (810) entièrement contenue dans ledit second réservoir (70) de telle sorte que ledit second injecteur (80) est en communication avec ledit second réservoir (70) pour injecter le gaz sous pression dans ledit second réservoir (70) afin de déplacer au moins une partie du matériau polymère fondu auxiliaire dudit second réservoir (70) dans ladite cavité principale (12) de manière à empêcher une entrée dudit gaz sous pression dans la cavité principale (12) ;
dans lequel ledit premier réservoir (20) est en communication fluidique avec ladite première région (12') et ledit second réservoir (70) est en communication fluidique avec ladite seconde région (12") et dans lequel ladite première embouchure (21) et ladite seconde embouchure (71) sont disposées sensiblement l'une devant l'autre ou de manière à se faire face.

2. Appareil de moulage par injection (1) destiné à fabriquer un article (P) selon la revendication 1, dans lequel ladite cavité principale (12) est au moins étendue le long d'au moins une direction de remplissage (I) dudit matériau polymère fondu primaire, et ladite surface interne (11) comprend au moins une surface latérale (13) qui délimite ladite cavité principale (12) au moins autour de ladite direction de remplissage (I) et dans laquelle ladite embouchure (21) traverse ladite surface latérale (13).

3. Appareil de moulage par injection (1) destiné à fabriquer un article (P) selon la revendication 1 ou 2, dans lequel ledit injecteur de gaz sous pression (30) est configuré pour injecter ledit gaz sous pression dans ledit réservoir (20) afin de déplacer au moins une partie dudit matériau polymère fondu auxiliaire dudit réservoir (20) dans ladite cavité principale (12) le long d'une direction de poussée (S) ; dans lequel ladite direction de poussée (S) est orientée sensiblement transversalement par rapport à ladite direction de remplissage (I), ou coupe ladite direction de remplissage (I).

4. Appareil de moulage par injection (1) destiné à fabriquer un article (P) selon l'une quelconque des revendications précédentes, dans lequel la surface interne (11) correspond à un négatif dudit article (P) à fabriquer ou est complémentaire à celui-ci.

5. Appareil de moulage par injection (1) destiné à fabriquer un article (P) selon l'une quelconque des revendications précédentes, dans lequel ledit réservoir (20) communique avec une zone interposée entre ladite première région d'admission (12') et ladite seconde région d'admission (12").

6. Appareil de moulage par injection (1) destiné à fabriquer un article (P) selon l'une quelconque des revendications précédentes, dans lequel ladite cavité principale (12) et ledit réservoir (20) sont définis à l'intérieur dudit corps de moule (10).

7. Appareil de moulage par injection (1) destiné à fabriquer un article (P) selon l'une quelconque des revendications précédentes, comprenant un canal d'admission (22), interposé entre ledit réservoir (20) et ladite embouchure (21) et dans lequel ledit canal d'admission (22) a une section transversale constante ou une qui se rétrécit progressivement vers ladite admission (21).

8. Appareil de moulage par injection (1) selon l'une quelconque des revendications précédentes, dans lequel ledit second réservoir (70) est défini à l'intérieur dudit corps de moule (10).

9. Appareil de moulage par injection (1) selon l'une quelconque des revendications précédentes en combinaison avec la revendication 7, dans lequel ledit canal d'admission (22) est un premier canal d'admission et comprenant un second canal d'admission (72) interposé entre ledit second réservoir (70) et ladite seconde embouchure (71) et dans lequel ledit second canal d'admission (72) a une section transversale constante ou une qui se rétrécit progressivement vers ladite seconde embouchure (71).

10. Appareil de moulage par injection (1) destiné à fabriquer un article (P) selon l'une quelconque des revendications précédentes, comprenant un dispositif de refroidissement, de chauffage et de refroidissement configuré pour refroidir ou chauffer le corps de moule (10).

11. Installation (2) de moulage par injection (1) destiné à fabriquer un article (P) comprenant un appareil de moulage par injection (1) destiné à fabriquer un article (P) selon l'une quelconque des revendications précédentes et un matériau polymère fondu primaire, qui comprend une première fraction dudit matériau polymère fondu primaire et une seconde fraction dudit matériau polymère fondu primaire, et un matériau polymère fondu auxiliaire ; où le placement à côté de la première fraction dudit matériau polymère fondu primaire et de la seconde fraction dudit matériau polymère fondu primaire définit ou détermine une ligne de fusion (J) à l'intérieur de ladite cavité principale (12) ; et dans lequel ledit injecteur (30) de gaz sous pression est configuré pour injecter ledit gaz sous pression dans ledit réservoir (20) afin de déplacer au moins une partie dudit matériau polymère fondu auxiliaire dudit réservoir (20) dans ladite cavité principale (12), et dans lequel l'injecteur (30) de gaz sous pression comprend une buse (31) ayant une sortie (310) entièrement contenue dans ledit réservoir (20) afin d'injecter ou de pousser le matériau polymère fondu auxiliaire dans la cavité principale (12) de telle sorte qu'au moins une partie dudit matériau polymère fondu primaire agit en tant que barrière contre une pénétration dudit gaz sous pression dans la cavité principale (12) et de telle sorte qu'au moins une partie de ladite première fraction est forcée à travers ladite seconde fraction de matériau et/ou qu'au moins une partie de ladite seconde fraction est forcée à travers ladite première fraction de matériau ;
dans lequel ledit réservoir (20) est un premier réservoir, ladite embouchure (21) est une première embouchure, ledit injecteur (30) est un premier injecteur et ladite buse (31) est une première buse ; et
dans lequel l'appareil de moulage par injection (1) supplémentaire comprend en outre :
- un second réservoir (70) en communication fluidique avec ladite cavité principale (12) au moyen d'une seconde embouchure (71) traversant ladite surface interne (11) et apte, lors de l'utilisation, à contenir un matériau polymère fondu auxiliaire ;
- un second injecteur (80) de gaz sous pression, dans lequel ledit second injecteur (80) comprend une seconde buse (81) ayant une sortie (810) entièrement contenue dans ledit second réservoir (70) de telle sorte que ledit second injecteur (80) est en communication avec ledit second réservoir (70) pour injecter le gaz sous pression dans ledit second réservoir (70) afin de déplacer au moins une partie du matériau polymère fondu auxiliaire dudit second réservoir (70) dans ladite cavité principale (12) de manière à empêcher une entrée dudit gaz sous pression dans la cavité principale (12) ;
dans lequel la cavité principale (12) de l'appareil de moulage par injection (1) comprend une première région (12') apte à recevoir la première fraction dudit matériau polymère fondu primaire et une seconde région (12") apte à recevoir ladite seconde fraction dudit matériau polymère fondu primaire ;
dans lequel ledit premier réservoir (20) est en communication fluidique avec ladite première région (12') et ledit second réservoir (70) est en communication fluidique avec ladite seconde région (12") et dans lequel ladite première embouchure (21) et ladite seconde embouchure (71) sont disposées sensiblement l'une devant l'autre ou de manière à se faire face.

12. Procédé de moulage par injection d'un article (P) comprenant les étapes consistant à :
- injecter un matériau polymère fondu primaire comprenant une première fraction de matériau polymère fondu primaire et une seconde fraction de matériau polymère fondu primaire dans une cavité principale (12) d'un corps de moule (10),
- faire avancer ladite première fraction de matériau polymère fondu primaire et ladite seconde fraction de matériau polymère fondu primaire le long d'une direction de remplissage (I) de telle sorte que ladite première fraction de matériau polymère fondu primaire et ladite seconde fraction de matériau polymère fondu primaire se rencontrent le long d'une ligne de fusion (J) ;
- fournir un matériau polymère fondu auxiliaire ;
- souffler du gaz sous pression dans ledit matériau polymère fondu auxiliaire de manière à alimenter ledit matériau polymère fondu auxiliaire vers ladite cavité principale (12) à travers au moins une embouchure (21) en communication fluidique avec ladite cavité principale (12) de manière à déplacer une partie du matériau polymère fondu primaire à l'intérieur de ladite cavité principale (12) et de manière à empêcher une entrée dudit gaz sous pression à l'intérieur de ladite cavité principale (12) ;
dans lequel le matériau polymère fondu auxiliaire est un premier matériau polymère fondu auxiliaire et ladite embouchure (21) est une première bouche, et ladite étape consistant à souffler du gaz sous pression dans ledit premier matériau polymère fondu auxiliaire de manière à alimenter ledit premier matériau polymère fondu auxiliaire vers ladite cavité principale (12) se déroule le long d'une direction de poussée (S) dans une première orientation ;
et dans lequel le procédé comporte également les étapes consistant à :
- fournir un second matériau polymère fondu auxiliaire ;
- souffler du gaz sous pression dans ledit second matériau polymère fondu auxiliaire de manière à alimenter ledit second matériau polymère fondu auxiliaire vers ladite cavité principale (12) à travers au moins une seconde embouchure (71) en communication fluidique avec ladite cavité principale (12) de manière à déplacer une partie du matériau polymère fondu primaire dans ladite cavité principale (12) et de manière à empêcher une entrée de gaz sous pression dans ladite cavité principale (12), et ladite étape consistant à souffler du gaz sous pression dans ledit second matériau polymère fondu auxiliaire de manière à alimenter ledit second matériau polymère fondu auxiliaire à travers ladite cavité principale (12) se produit sensiblement le long de ladite direction de poussée (S) dans une seconde orientation opposée par rapport à ladite première orientation.

13. Procédé de moulage par injection d'un article (P) selon la revendication 12, dans lequel ladite première fraction de matériau polymère fondu primaire et ladite seconde fraction de matériau polymère fondu primaire avancent respectivement dans une première région (12') et une seconde région (12") de ladite cavité principale (12) et ladite ligne de fusion (J) est formée dans une zone interposée entre ladite première région (12') et ladite seconde région (12") ;
et dans lequel le déplacement d'une partie du matériau polymère fondu primaire à l'intérieur de ladite cavité principale (12) se produit en correspondance avec ladite zone interposée entre ladite première région (12') et ladite seconde région (12").

14. Procédé de moulage par injection d'un article (P) selon la revendication 12 ou 13, dans lequel le déplacement d'une partie du matériau polymère fondu primaire à l'intérieur de ladite cavité principale (12) se produit le long d'une direction transversale ou parallèle à ladite ligne de fusion (J).

15. Procédé de moulage par injection d'un matériau polymère d'un article (P) selon l'une quelconque des revendications 12 à 14, dans lequel ladite étape consistant à souffler du gaz sous pression dans ledit premier matériau polymère fondu auxiliaire et ladite étape consistant à souffler du gaz sous pression dans ledit second matériau polymère fondu auxiliaire se déroulent simultanément ou alternativement.

16. Procédé de moulage par injection de matériau polymère d'un article (P) selon l'une quelconque des revendications 12 à 15, dans lequel le gaz sous pression est injecté sans former d'espaces vides dans le matériau polymère fondu primaire et/ou dans lequel ledit article (P) est un article solide.
